(19) Europäisches Patentamt
European Patent Office
Office européen des brevets

(11) **EP 1 577 575 B1**

(12) **EUROPÄISCHE PATENTSCHRIFT**

(45) Veröffentlichungstag und Bekanntmachung des Hinweises auf die Patenterteilung:
**18.04.2012  Patentblatt 2012/16**

(51) Int Cl.:
***F16D 13/64*** *(2006.01)*

(21) Anmeldenummer: **04006276.2**

(22) Anmeldetag: **17.03.2004**

(54) **Lamellenkupplung**

Multiple disc clutch

Embrayage à disques

(84) Benannte Vertragsstaaten:
**DE FR GB IT**

(43) Veröffentlichungstag der Anmeldung:
**21.09.2005  Patentblatt 2005/38**

(73) Patentinhaber: **BorgWarner, Inc.**
**Auburn Hills, MI 48326-2872 (US)**

(72) Erfinder: **Heinrich, Johannes, Dr.**
**61381 Friedrichsdorf (DE)**

(74) Vertreter: **Neunert, Peter Andreas**
**Patentanwälte**
**Westphal, Mussgnug & Partner**
**Am Riettor 5**
**78048 Villingen-Schwenningen (DE)**

(56) Entgegenhaltungen:
EP-A- 1 411 256    DE-A- 10 255 537
DE-A- 19 530 443   US-A- 5 305 943
US-A- 5 975 267    US-A- 6 044 948
US-A- 6 116 398    US-A1- 2004 035 666

• **PROF. DR. -ING. B.SAUER: "Tutorium Kupplungen - Einführung" INERNET ARTICLE , [Online] XP002295532 Gefunden im Internet: <URL:http://megt.mv.uni-kl.de/downloads/me 2/tutorium2_1.pdf> [gefunden am 2004-09-08]**

**Beschreibung**

Die Erfindung betrifft eine Lamellenkupplung gemäß dem Oberbegriff des Patentanspruchs 1.

Derartige Lamellenkupplungen sind aus dem stand der Technik in einer Vielzahl von Abwandlungen bekannt z.B. US-6116398, DE-19530443, US-2004/035666, US-5305943 oder EP-1411256. Eine typische Ausführungsvariante ist in der Zeichnungsfigur 25 dargestellt. Die in der Figur 25 dargestellte Lamellenkupplung umfasst einen Außenlamellenträger 1, einen Innenlamellenträger 2, Außenlamellen 4, 5, 6 7, Innenlamellen 10, 11, 12, 13 (mit Reibbelägen) und eine Rückenplatte 8.

Der Außenlamellenträger 1 und der Innenlamellenträger 2 sind um eine gemeinsame Drehachse ax drehbar. Die Außenlamellen 4, 5, 6, 7 werden von dem Außenlamellenträger 1 drehfest getragen. Zu diesem Zweck weisen die Außenlamellen 4, 5, 6, 7 eine Außenverzahnung auf, welche in eine entsprechende Innenverzahnung des Außenlamellenträgers 1 eingreift. In entsprechender Weise sind die Innenlamellen 10, 11, 12, 13 mit dem Innenlamellenträger 2 drehfest verbunden. Hier weisen die Innenlamellen 10, 11, 12, 13 innenumfangsseitig eine Verzahnung auf, welche in eine entsprechende Außenverzahnung des Innenlamellenträgers 2 eingreift. Außen- und Innenlamellen 4, 5, 6, 7, 10, 11, 12, 13 sowie die ebenfalls eine in die Innenverzahnung des Außenlamellenträgers 1 eingreifende Außenverzahnung aufweisende Rückenplatte 8 sind auf diese Weise axial verschieblich auf den jeweiligen Lamellenträgern 1, 2 geführt.

Außen- und Innenlamellen 4, 5, 6, 7, 10, 11, 12, 13 sowie die Rückenplatte 8 sind axial nebeneinander angeordnet, wobei jeweils eine von dem Außenlamellenträger 1 getragene Außenlamelle 4, 5, 6, 7 und eine von dem Innenlamellenträger 2 getragene Innenlamelle 10, 11, 12, 13 benachbart zueinander angeordnet sind. Die von dem Außenlamellenträger 1 getragene Rückenplatte 8 ist benachbart zu der von dem Innenlamellenträger 2 getragenen Innenlamelle 13 angeordnet. Außen- und Innenlamellen 4, 5, 6, 7, 10, 11, 12, 13 bilden auf diese Weise ein Lamellenpaket.

Die Lamellenkupplung wird mittels eines axial beweglichen Aktuators 3 (üblicherweise ein hydraulisch betätigter Kolben) betätigt, in dem dieser gegen die ihm nächstliegende Lamelle, vorliegend eine Außenlamelle 4 drückt. Die Rückenplatte 8 stützt sich im Beispiel über einen Sicherungsring 9 gegen den Außenlamellenträger 1 ab, um die Anpresskraft $F_A$ des axial beweglichen Aktuators 3 aufzunehmen.

Mittlerweile geht die Tendenz dazu, sämtliche Bauteile einer Lamellenkupplung möglichst einfach und mit geringem Materialbedarf auszuführen. Dies führt dazu, dass die Dicke der Lamellen als auch der Rückenplatte soweit reduziert wird, wie es die mechanische Belastung zulässt. Dies hat zur Folge, dass bei hoher Belastung, insbesondere bei hohen Anpresskräften eine Überhitzung der Reibelemente (Lamellen- und Rückenplatte) in bestimmten Bereichen auftreten kann, da die bei der Momentenübertragung erzeugte Wärme nicht mehr zuverlässig abgeführt werden kann. Häufig treten derartige Überhitzungseffekte in der Nähe der Rückenplatte auf.

Die Aufgabe der Erfindung liegt nunmehr darin, eine Lamellenkupplung an sich bekannter Art derart auszubilden und weiterzubilden, dass eine lokale Überhitzung und Überanpressung der Reibelemente reduziert wird.

Diese Aufgabe wird bei einer Lamellenkupplung der gattungsgemäßen Art durch die Merkmale des kennzeichnenden Teils des Patentanspruchs 1 gelöst.

Vorteilhafte Ausführungen und Weiterbildungen der Erfindung sind in den Unteransprüchen angegeben.

Die Erfindung geht nunmehr von einer Lamellenkupplung an sich bekannter Art aus, mit von einem um eine Drehachse drehbaren Außenlamellenträger getragenen Außenlamellen und mit von einem um die Drehachse drehbaren Innenlamellenträger getragenen Innenlamellen, wobei die Außenlamellen und die Innenlamellen ein Lamellenpaket bilden. Ferner ist ein axial beweglicher Aktuator vorgesehen, welcher beim Betätigen auf einem mittleren Kraftangriffsradius bezüglich der Drehachse eine Anpresskraft auf eine eine Andruckplatte bildende Lamelle des Lamellenpakets überträgt.

Unter mittlerem Kraftangriffsradius ist hierbei das ringförmige Schwerezentrum der angreifenden Kräfte zu verstehen. Es kann sich somit um einen linienförmigen oder flächigen Krafteintrag handeln, welcher mittels einer Ersatzkraft darstellbar ist, die auf dem mittleren Kraftangriffsradius wirkt.

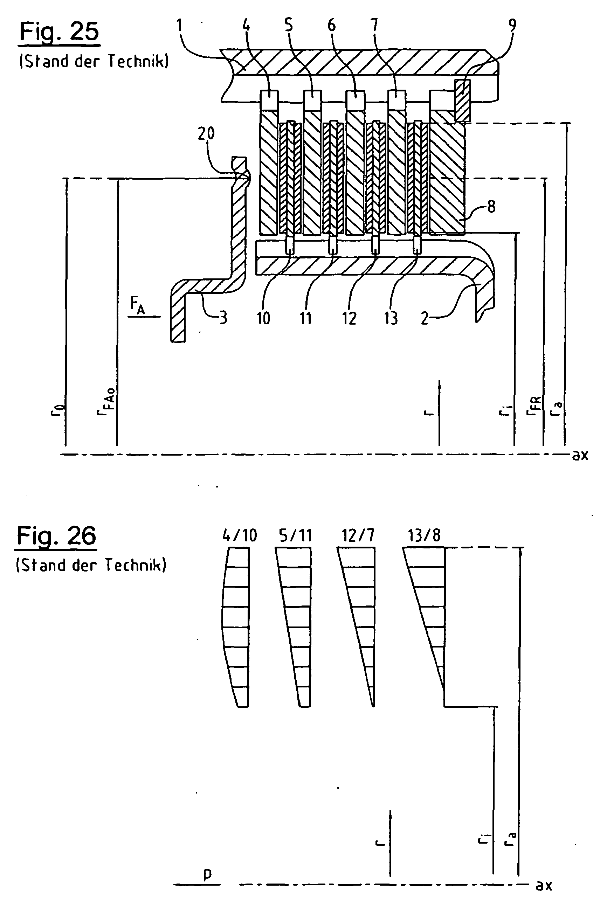

Bei dem in der Figur 25 dargestellten Beispiel weist der Aktuator 3 eine Ringkuppe 20 auf einem optimalen Kraftangriffsradius $r_{FA0}$ auf. Der Kraftangriff erfolgt hier also näherungsweise auf einer umlaufenden Linie mit dem Kraftangriffsradius $r_{FA0}$, welcher mit dem mittleren Kraftangriffsradius $r_{FA}$ des Aktuators 3 entsprechend obiger Definition zusammenfällt.

Die Lamellenkupplung, von der die Erfindung ausgeht, umfasst fernerhin eine Rückenplatte, welche beim Betätigen des Aktuators auf einem mittleren Kraftangriffsradius $r_{FR}$ der Rückenplatte bezüglich der Drehachse ax eine Gegenkraft auf eine eine Gegenplatte bildende Lamelle des Lamellenpakets überträgt.

Beim Betätigen des Aktuators werden die Lamellen in reibschlüssigen Kontakt mit einem mittleren wirksamen Reibradius verbracht und übertragen dabei ein Drehmoment.

Die Erfindung basiert nunmehr auf der Analyse der Ursache der beobachteten Überhitzungseffekte: Geht man beispielhaft von einer Anordnung entsprechend der Zeichnungsfigur 25 aus, so wird die axiale Anpresskraft $F_A$ des Aktuators 3 über die Andruckplatte 4 durch das ganze Lamellenpaket geleitet. Unter der Belastung verformen sich die Bauteile in tellernder Weise üblicherweise jedoch um Beträge von bis zu einigen Zehntel Millimeter. Ist die Rückenplatte 8 wie im Ausführungsbeispiel entsprechend der Figur 25 am Außenradius $r_a$ abgestützt, so erfährt diese ein Stülpmoment, welches sich so auswirkt, dass sie am Innenradius $r_i$ nach rechts ausweicht. Wäre die Rückenplatte am Innenradius $r_i$ abgestützt, so erführe sie ein Stülpmoment in der Weise, dass sie an deren Außenradius $r_a$ nach rechts gebogen würde.

Als Folge tritt in beiden Fällen eine ungleichmäßige Flächenpressungsverteilung auf. Zwischen unterschiedlichen Lamellen auftretende Flächenpressungsverteilungen p sind in Abhängigkeit vom Radius r in der Zeichnungsfigur 26 dargestellt. Links ist die Flächenpressung p im Reibbelag zwischen Außenlamelle 4 und Innenlamelle 10 zu sehen. Daneben ist die Flächenpressung p im Belag zwischen Außenlamelle 5 und Innenlamelle 11 abgebildet. Daneben wiederum ist die Flächenpressungsverteilung p zwischen Innenlamelle 12 und Außenlamelle 7 skizziert. Ganz rechts ist die Flächenpressungsverteilung im Belag zwischen der Innenlamelle 13 der hier Reibmomente übertragenden Rückenplatte 8 dargestellt.

Unter Vernachlässigung von Reibungsverlusten in den Mitnehmerverzahnungen der Außen- und Innenlamellen in ihren Trägern ist die über allen Flächen integrierte Flächenpressung jeweils identisch. Jedoch zeigt die äußerste rechte Lamelle (Rückenplatte 8) ein extremes Tragbild, bei welcher der radial äußere Bereich etwa die doppelte mittlere Pressung übertragen muss, während der innere Bereich bis auf Null entlastet wird.

Dass die Pressungsverteilung der linken Lamelle 10 etwas bogenförmig gekrümmt ist, liegt an der Durchbiegung der relativ dünnen Andrucklamelle 4.

Der Erfindung liegt nunmehr die Idee zu Grunde, die Pressungsverteilung insbesondere bei hohen Anpresskräften zu vergleichmäßigen oder im Hinblick auf die Reibleistungen zu optimieren.

Erfindungsgemäß ist daher bei einer gattungsgemäßen Lamellenkupplung vorgesehen, dass das Verhältnis der mittleren Kraftangriffsradien zum mittleren Reibradius bei einer Anpresskraft, welche in etwa der zu einer Übertragung des Nenndrehmoments notwendigen Nennanpresskraft entspricht, kleiner oder gleich 1 und größer als 0,97 ist. Dadurch wird erreicht, dass bei hohen Anpresskräften eine gleichmäßige Verteilung der Flächenpressung bzw. der Reibleistung im Lamellenpaket auftritt. Lokale Überhitzungen können auf diese Weise nicht mehr auftreten.

Der mittlere Reibradius $r_m$ ist dabei definiert durch die Gleichung

$$r_m = \frac{2}{3} \cdot \frac{r_a^3 - r_i^3}{r_a^2 - r_i^2}$$

wobei $r_a$ den Außenradius und $r_i$ den Innenradius der Reibflächen bezeichnen.

Es wird darauf hingewiesen, dass bei geringeren Anpresskräften durchaus abweichende Verhältnisse der mittleren Kraftangriffsradien zum mittleren Reibradius gewählt werden können, da der Reibenergieeintrag und damit die Wärmeentwicklung geringer ist. Auf diese Weise ist eine Anpassung an andere Erfordernisse der Kupplung möglich.

Es hat sich als besonders vorteilhaft herausgestellt, das Verhältnis der mittleren Kraftangriffsradien zum mittleren Reibradius bei der Anpresskraft, welche in etwa der Nennanpresskraft entspricht, größer als 0,99, vorzugsweise 0,997 zu wählen. Auf diese Weise wird einerseits eine nahezu homogene Flächenpressungsverteilung in allen Lamellen der Lamellenkupplung erreicht und darüber hinaus sichergestellt, dass bei einer üblicherweise von innen nach außen erfolgenden Wärmeabfuhr keine lokalen Überhitzungen der Reibelemente auftreten.

Idealerweise sind die mittleren Kraftangriffsradien bei der vorerwähnten Anpresskraft, welche in etwa der Nennanpresskraft entspricht, identisch oder nahezu identisch. Auf diese Weise erreicht man, dass in allen Lamellen nahezu dieselbe Flächenpressungsverteilung und damit ebenso nahezu dieselbe Wärmeverteilung herrscht.

Eine Möglichkeit, das Verhältnis des mittleren Kraftangriffsradius an der Rückenplatte zum mittleren Reibradius bei der vorerwähnten Anpresskraft entsprechend einzustellen, besteht darin, die bei einer derartigen Anpresskraft auftretenden Verformung der Rückenplatte vorzuhalten. Eine Möglichkeit hierzu besteht darin, dass die Rückenplatte radial außerhalb des mittleren Reibradius eine Freiwinkelfläche aufweist, wenn sie axial an den Außenlamellenträger abgestützt ist bzw. dass die Rückenplatte radial innerhalb des mittleren Reibradius eine Freiwinkelfläche aufweist, wenn sie axial am Innenlamellenträger abgestützt ist. Wird nun die Rückenplatte auf Grund der Anpresskraft verformt, so stützt sich die durch die Freiwinkelfläche gebildete Ringkuppe am mittleren Reibradius gegen die angrenzende Gegenplatte ab.

Die Freiwinkelfläche ist im einfachsten Fall kegelförmig ausgebildet. Sie kann jedoch auch konkav oder konvex gekrümmt oder stufig ausgebildet sein.

In weiterer Ausgestaltung der Erfindung ist vorgesehen, dass die Rückenplatte und/oder der Aktuator eine mit der Andruckplatte bzw. der Gegenplatte beim Betätigen in Wirkverbindung tretende Ringkuppe aufweist bzw. Ringkuppen aufweisen. Entsprechende Freiwinkelflächen sind auf diese Weise zwangsläufig vorhanden. Diese Variante hat weiterhin den Vorteil, dass der jeweilige Kraftangriffsradius vergleichsweise exakt vorgegeben wird. Eine derartige Ausführungsvariante ist dann zulässig und möglich, wenn die Durchbiegung der Andrucklamellen bzw. der Gegenplatte in einem vertretbaren Rahmen gehalten wird. In manchen Anwendungsfällen ist es jedoch günstiger, einen flächigeren Krafteintrag vorzugeben.

Wie vorstehend im Einzelnen dargelegt wurde, ist es günstig, bei hohen Anpresskräften im Bereich der Nennanpresskraft eine weitgehend homogene Pressungsverteilung bereitzustellen, was dann wiederum eine homogene Wärmeverteilung impliziert. Bei kleinen Drehmomenten wie sie z. B. beim sogenannten "Kriechen" erforderlich sind, kann es jedoch von Nachteil sein, wenn die Flächenpressung gleichmäßig verteilt ist. Die Absolutwerte der Pressung sind bei diesen kleinen Drehmomenten so niedrig, dass sich schon kleine, örtlich begrenzte, Abweichungen in der Lamellen- und/oder Belagdicke störend bemerkbar machen. Der mittlere wirksame Reibradius verändert sich hierdurch, wenn sich die Innenlamellen gegenüber den Außenlamellen verdrehen, was zu Schwankungen im übertragenen Reibmoment führt (auch "Shudder" genannt).

Aus diesem Grund ist es vorteilhaft, bei kleinen Reibmomenten die absoluten Pressungswerte zu erhöhen und hierfür die Anpresskraft auf eine kleinere Fläche zu verteilen. Hierzu bietet es sich an, die Pressung auf den inneren oder den äußeren Radienbereich zu konzentrieren.

Bei kleinen Drehmomenten ist es vorteilhaft, wenn die Regelgröße "Drehmoment zu Druck" (auch als "clutch gain" bezeichnet und in Nm/bar angegeben) möglichst klein ist.

Die Konzentration auf den inneren Radienbereich führt zu einem kleineren wirksamen Reibradius, hiermit bei einer bestimmten Axialkraft zu einem kleineren übertragenen Reibmoment und somit zusätzlich zum Vorteil eines kleineren "clutch gains" bei niedrigen Drükken.

Erfindungsgemäß ist daher vorgesehen, dass der mittlere Kraftangriffsradius des Aktuators und/oder der mittlere Kraftangriffsradius der Rückenplatte bei einer Anpresskraft, welche in etwa bis zu 30 %, vorzugsweise etwa bis zu 5 % bis 15 % der Nennanpresskraft entspricht, zwischen dem mittleren Reibradius und einem inneren Radius der Reibflächen der Lamellen liegt bzw. liegen. In einer alternativen Ausführungsform ist vorgesehen, dass der mittlere Kraftangriffsradius des Aktuators und/oder der mittlere Kraftangriffsradius der Rückenplatte bei einer Anpresskraft, welche in etwa bis zu 30 %, vorzugsweise etwa bis zu 5 % bis 15 % der Nennanpresskraft entspricht, zwischen dem mittleren Reibradius und einem äußeren Radius der Reibflächen der Lamellen liegt bzw. liegen.

In vielen Fällen ist es ausreichend, den mittleren Kraftangriffsradius des Aktuators und/oder den mittleren Kraftangriffsradius der Rückenplatte bei der vorerwähnten Anpresskraft von etwa bis zu 30 %, vorzugsweise etwa bis zu 5 % bis 15 % der Nennanpresskraft im inneren Fünftel zwischen dem Reibradius und dem Innenradius der Reibflächen der Lamellen zu wählen. In der alternativen Ausführungsform ist es ausreichend, den mittleren Kraftangriffsradius des Aktuators und/oder den mittleren Kraftangriffsradius der Rückenplatte bei der vorerwähnten Anpresskraft von etwa bis zu 30 %, vorzugsweise etwa bis zu 5 % bis 15 % der Nennanpresskraft im äußeren Fünftel zwischen dem Reibradius und dem Außenradius der Reibflächen der Lamellen zu wählen.

Höchstvorteilhafterweise liegt bzw. liegen der mittlere Kraftangriffsradius des Aktuators und/oder der mittlere Kraftangriffsradius der Rückenplatte bei dieser Anpresskraft am inneren Radius der Reibflächen der Lamellen. In der alternativen Ausführungsform liegt bzw. liegen der mittlere Kraftangriffsradius des Aktuators und/ oder der mittlere Kraftangriffsradius der Rückenplatte bei dieser Anpresskraft am äußeren Radius der Reibflächen der Lamellen.

Aus Symmetriegründen ist es höchst vorteilhaft in beiden Ausführungsformen die mittleren Kraftangriffsradien des Aktuators und der Rückenplatte bei der niedrigen Anpresskraft identisch zu wählen.

Sehr einfach lässt sich dies dadurch realisieren, dass die Rückenplatte radial außerhalb des inneren Radius wenigstens eine Freiwinkelfläche aufweist, insbesondere wenn die Rückenplatte axial am Außenlamellenträger abgestützt ist. In der alternativen Ausführungsform wird dies dadurch realisiert, dass die Rückenplatte radial innerhalb des äußeren Radius wenigstens eine Freiwinkelfläche aufweist, insbesondere wenn die Rükkenplatte axial am Innenlamellenträger abgestützt ist. Bei kleinen Anpresskräften wirkt der Kontakt zur Gegenplatte damit vorwiegend am inneren Radius bzw. in der alternativen Ausführungsform am äußeren Radius. Bei größeren Kräften wird die Rückenplatte gebogen, bis die Freiwinkelfläche überdrückt ist.

Vorzugsweise ist die wenigstens eine Freiwinkelfläche kegelförmig ausgebildet. Eine derartige Ausführung ist vergleichsweise einfach und damit kostengünstig herstellbar. Anstelle einer Kegelform kann selbstverständlich auch jede sonstige Form, insbesondere auch eine konkave oder konvexe oder gestufte Form gewählt werden, wobei eine gestufte Form mit höherer Genauigkeit als eine Kegelform herzustellen ist.

In besonders vorteilhafter Ausführung weist die Rückenplatte und/oder der Aktuator eine mit der Andruckplatte bzw. der Gegenplatte beim Betätigen in Wirkverbindung tretende Ringkuppe auf. Die Ringkuppe bzw. die Ringkuppen ist bzw. sind am Ort des entsprechenden mittleren Kraftangriffsradius bei der niedrigen Anpresskraft angeordnet. Diese wird bei hohen Anpresskräften in der Nähe der Nennanpresskraft überdrückt, so dass die Anpresskräfte sowohl des Aktuators als auch der Rückenplatte mit hohen Beträgen an den mittleren Kraftangriffsradien angreifen, welche im Wesentlichen dem mittleren Reibradius entsprechen.

Um ein Überdrücken zu gewährleisten, sieht die Erfindung vorteilhafterweise ein federndes Element am Aktuator und/oder der Rückenplatte vor, welches bei einer Anpresskraft welche in etwa bis zu 30 %, vorzugsweise etwa bis zu 5 % bis 15 % der Nennanpresskraft entspricht, die Anpresskraft am inneren oder nahe am inneren Radius überträgt bzw. übertragen. In der alternativen Ausführungsform der Erfindung ist ein federndes Element am Aktuator und/oder der Rückenplatte vorgesehen, welches bei einer Anpresskraft welche in etwa bis zu 30 %, vorzugsweise etwa bis zu 5 % bis 15 % der Nennanpresskraft entspricht, die Anpresskraft am äußeren oder nahe am äußeren Radius überträgt bzw. überträgt. Obwohl es grundsätzlich möglich ist, die Anpressplatte bzw. die Gegenplatte mit einem derartigen federnden Element auszustatten, ist es aus fertigungstechnischen Gründen sinnvoller, das federnde Element am Aktuator vorzusehen.

Das federnde Element bzw. die federnden Elemente können Tellerfedern, Schraubenfedern oder sonstige elastische Elemente sein. Es ist auch möglich, dass das federnde Element bzw. die federnden Elemente durch eine entsprechende Formgebung des Aktuators und/oder der Rückenplatte gebildet ist bzw. sind.

So kann beispielsweise die Rückenplatte im Axialhalbschnitt hakenförmig ausgebildet sein mit einem radial im Bereich des inneren Radius angeordneten Finger und einem radial im Bereich des mittleren Reibradius angeordneten Knie. Das Knie ist dabei vorzugsweise bis zu einer Anpresskraft von etwa 30 %, vorzugsweise von etwa 5 % bis 15 % der Nennanpresskraft von der Gegenplatte beabstandet, während der Finger im Bereich des inneren Radius aufsitzt. In der alternativen Ausführungsform kann die Rückenplatte im Axialhalbschnitt hakenförmig ausgebildet sein mit einem radial im Bereich des äußeren Radius angeordneten Finger und einem radial im Bereich des mittleren Reibradius angeordneten Knie. Das Knie ist dabei vorzugsweise bis zu einer Anpresskraft von etwa 30 %, vorzugsweise von etwa 5 % bis 15 % der Nennanpresskraft von der Gegenplatte beabstandet, während der Finger im Bereich des äußeren Radius aufsitzt.

Der Aktuator kann beispielsweise im Axialhalbschnitt L-förmig ausgebildet sein und einen inneren Schenkel, welcher sich im Bereich des inneren Radius befindet, sowie ein radial im Bereich des mittleren Reibradius angeordnetes Knie aufweisen. In der alternativen Ausführungsform kann der Aktuator beispielsweise im Axialhalbschnitt L-förmig ausgebildet sein und einen äußeren Schenkel, welcher sich im Bereich des äußeren Radius befindet, sowie ein radial im Bereich des mittleren Reibradius angeordnetes Knie aufweisen.

Das Knie ist vorzugsweise bis zu einer Anpresskraft von etwa 30 %, vorzugsweise von etwa 5 % bis 15 % der Nennanpresskraft von der Anpressplatte beabstandet. Der innere Schenkel sitzt im Bereich des Innenradius der Anpressplatte bei dieser Anpresskraft auf bzw. der äußere Schenkel der alternativen Ausführungsform sitzt im Bereich des Außenradius der Anpressplatte bei dieser Anpresskraft auf.

Während bei üblichen Lamellenkupplungen die von einem Außenlamellenträger getragene Rückenplatte benachbart zu einer Lamelle angeordnet ist, welche von dem anderen Lamellenträger getragen ist, hat es sich als vorteilhaft herausgestellt, dass die Gegenplatte mit demselben Lamellenträger verbunden ist wie die Rückenplatte. Gleiches gilt auch für die alternative Ausführungsform der Erfindung, in welcher die Rückenplatte von einem Innenlamellenträger getragen wird.

Vorzugsweise stützt sich die Rückenplatte über einen Sicherungsring gegen den Lamellenträger ab, mit dem die Rückenplatte drehfest verbunden ist.

In einer besonders bevorzugten Ausführungsform ist die Lamellenkupplung sowohl im Hinblick auf hohe Anpresskräfte im Bereich der Nennanpresskraft als auch im Hinblick auf kleine Drehmomente bei einer Anpresskraft, welche in etwa bis zu 30 %, vorzugsweise etwa bis zu 5 % bis 15 % der Nennanpresskraft, dadurch optimiert, dass einerseits das Verhältnis der mittleren Kraftangriffsradien zum mittleren Reibradius bei einer Anpresskraft, welche in etwa der zu einer Übertragung des Nenndrehmoments notwendigen Nennanpresskraft entspricht, kleiner oder gleich 1 und größer als 0,97 ist, und dass andererseits der mittlere Kraftangriffsradius des Aktuators und/oder der mittlere Kraftangriffsradius der Rückenplatte bei einer Anpresskraft, welche in etwa bis zu 30 %, vorzugsweise etwa bis zu 5 % bis 15 % der Nennanpresskraft entspricht, zwischen dem mittleren Reibradius und einem inneren Radius der Reibflächen der Lamellen liegt bzw. liegen oder alternativ zwischen dem mittleren Reibradius und einem äußeren Radius der Reibflächen der Lamellen liegt bzw. liegen. Auch bei der Kombination der beiden erfindungsgemäßen Optimierungen - einerseits für hohe Anpresskräfte und andererseits für geringere Anpresskräfte - der Lamellenkupplung kann jede bevorzugte Ausführungsform der Lamellenkupplung, welche für hohe Anpresskräfte optimiert ist, mit jeder bevorzugten Ausführungsform der Lamellenkupplung, welche für geringe Anpresskräfte optimiert ist, kombiniert werden.

Diverse Ausführungsvarianten der Erfindung sind in den Zeichnungen dargestellt. Es zeigt:

Figur 1      ein erstes Ausführungsbeispiel einer erfindungsgemäßen Lamellenkupplung mit Rückenplatte mit einer Freiwinkelfläche,

Figur 2      eine Flächenpressungsverteilung in der Lamellenkupplung mit Rückenplatte mit einer Freiwinkelfläche entsprechend der Figur 1 bei hoher Axialkraft,

Figur 3      ein zweites Ausführungsbeispiel einer erfindungsgemäßen Lamellenkupplung mit einer stufigen Rückenplatte,

Figur 4      eine Flächenpressungsverteilung in der Lamellenkupplung mit stufiger Rückenplatte entsprechend der Figur 3 bei hoher Axialkraft,

Figur 5      ein drittes Ausführungsbeispiel einer erfin-

dungsgemäßen Lamellenkupplung mit Rükkenplatte mit einer Freiwinkelfläche,

Figur 6    ein viertes Ausführungsbeispiel einer erfindungsgemäßen Lamellenkupplung mit einer stufigen Rückenplatte,

Figur 7    ein fünftes Ausführungsbeispiel einer erfindungsgemäßen Lamellenkupplung mit Rükkenplatte mit zwei Freiwinkelflächen,

Figur 8    eine Flächenpressungsverteilung in der Lamellenkupplung mit Rückenplatte mit zwei Freiwinkelflächen entsprechend der Figur 7 bei kleiner Axialkraft,

Figur 9    ein sechstes Ausführungsbeispiel einer erfindungsgemäßen Lamellenkupplung mit Rückenplatte mit einer Freiwinkelfläche und einem federnden Element,

Figur 10   eine Flächenpressungsverteilung in der Lamellenkupplung mit Rückenplatte mit einer Freiwinkelfläche und einem federnden Element entsprechend der Figur 9 bei kleiner Axialkraft,

Figur 11   ein siebentes Ausführungsbeispiel einer erfindungsgemäßen Lamellenkupplung mit Rückenplatte mit zwei Freiwinkelflächen,

Figur 12   eine Flächenpressungsverteilung in der Lamellenkupplung mit Rückenplatte mit zwei Freiwinkelflächen entsprechend der Figur 11 bei kleiner Axialkraft,

Figur 13   ein achtes Ausführungsbeispiel einer erfindungsgemäßen Lamellenkupplung mit Rükkenplatte mit einer Freiwinkelfläche und einem federnden Element,

Figur 14   eine Flächenpressungsverteilung in der Lamellenkupplung mit Rückenplatte mit einer Freiwinkelfläche und einem federnden Element entsprechend der Figur 13 bei kleiner Axialkraft,

Figur 15   ein neuntes Ausführungsbeispiel einer erfindungsgemäßen Lamellenkupplung mit Rükkenplatte in Hakenform mit zwei Kraftangriffsradien sowie Aktuator mit variablem Kraftangriffsradius,

Figur 16   eine Flächenpressungsverteilung in einer Lamellenkupplung mit Rückenplatte in Hakenform mit zwei Kraftangriffsradien sowie Aktuator mit variablem Kraftangriffsradius entsprechend der Figur 15 bei kleiner Axialkraft,

Figur 17   ein zehntes Ausführungsbeispiel einer erfindungsgemäßen Lamellenkupplung mit Rükkenplatte in Hakenform mit zwei Kraftangriffsradien sowie Aktuator mit variablem Kraftangriffsradius,

Figur 18   eine Flächenpressungsverteilung in einer Lamellenkupplung mit Rückenplatte in Hakenform mit zwei Kraftangriffsradien sowie Aktuator mit variablem Kraftangriffsradius entsprechend der Figur 17 bei kleiner Axialkraft,

Figur 19   ein elftes Ausführungsbeispiel einer Lamellenkupplung mit anteiligem Aktuator mit variablem Kraftangriffsradius,

Figur 20   ein zwölftes Ausführungsbeispiel einer erfindungsgemäßen Lamellenkupplung mit Aktuator mit variablem Kraftangriffsradius,

Figur 21   ein dreizehntes Ausführungsbeispiel einer erfindungsgemäßen Lamellenkupplung mit Rückenplatte in Stufenform und einem federnden Element,

Figur 22   eine Flächenpressungsverteilung ein der Lamellenkupplung mit Rückenplatte in Stufenform und einem federnden Element entsprechend Figur 21 bei kleiner Axialkraft,

Figur 23   ein vierzehntes Ausführungsbeispiel einer erfindungsgemäßen Lamellenkupplung mit Rückenplatte in Stufenform und einem federnden Element,

Figur 24   ein fünfzehntes Ausführungsbeispiel einer erfindungsgemäßen Lamellenkupplung mit Rückenplatte in Stufenform und einer Lamelle als federndem Element,

Figur 25   eine Lamellenkupplung entsprechend dem Stand der Technik,

Figur 26   eine Flächenpressungsverteilung in einer Lamellenkupplung gemäß dem Stand der Technik entsprechend der Figur 25.

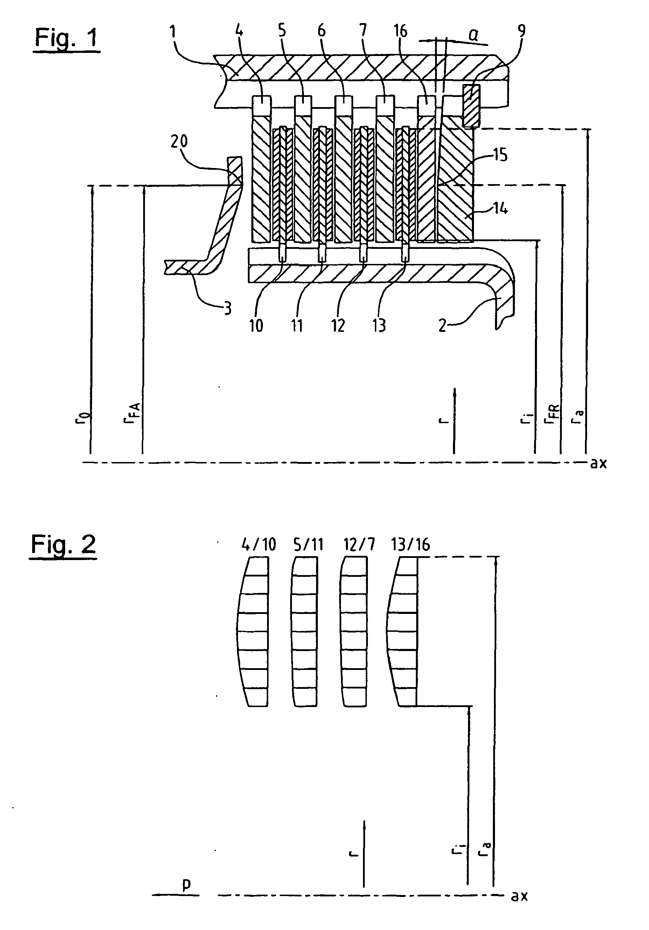

Die Figur 1 zeigt ein erstes Ausführungsbeispiel einer erfindungsgemäßen Lamellenkupplung. Wie die in Figur 25 dargestellte Lamellenkupplung gemäß dem Stand der Technik umfasst diese erfindungsgemäße Kupplung einen Außenlamellenträger 1, einen Innenlamellenträger 2, Außenlamellen 4, 5, 6, 7, und Innenlamellen 10, 11, 12, 13 (mit Reibbelägen), einen Aktuator 3 und eine Rückenplatte 14. Sämtliche Bestandteile haben dieselbe Funktion, wie bei der in Figur 25 dargestellten Kupplung. Es ist nicht erfindungswesentlich, dass die Reibbeläge an den Innenlamellen 10, 11, 12, 13 angeordnet sind. Alternativ können die Reibbeläge auch an den Außenlamellen 4, 5, 6, 7 oder abwechselnd an den Außen- und Innenlamellen 4, 5, 6, 7, 10, 11, 12, 13 angeordnet sein.

Der Erfindung liegt nunmehr die Idee zu Grunde, die Pressungsverteilung bei hoher Axialkraft zu vergleichmäßigen, indem die Verformung der Rückenplatte vorgehalten wird. Eine Möglichkeit hierzu ist die Ausbildung einer z. B. kegeligen Freiwinkelfläche unter einem Winkel "α" außerhalb des optimalen Kraftangriffsradius $r_{FA0}$, wie sie in Figur 1 an der Rückenplatte 14 dargestellt wird. Unter der Axialkraft "$F_A$" wird die Rückenplatte 14 etwas ausweichen, so dass ihre durch die Freiwinkelfläche gebildete Ringkuppe 15 am Radius $r_{FR}$ als Kraftangriffslinie wirkt. Vorteilhafterweise ist hierbei eine zusätzliche Außenlamelle 16, welche als Gegenplatte wirkt, eingesetzt. Bei geeigneter Gestaltung erhält man eine symmetrische Pressungsverteilung über der ganzen Kupplungslänge, d. h. die Pressung zwischen Lamellen 13 und 16 ist identisch mit der Pressung zwischen Lamellen 4 und 10 (vgl. Figur 2).

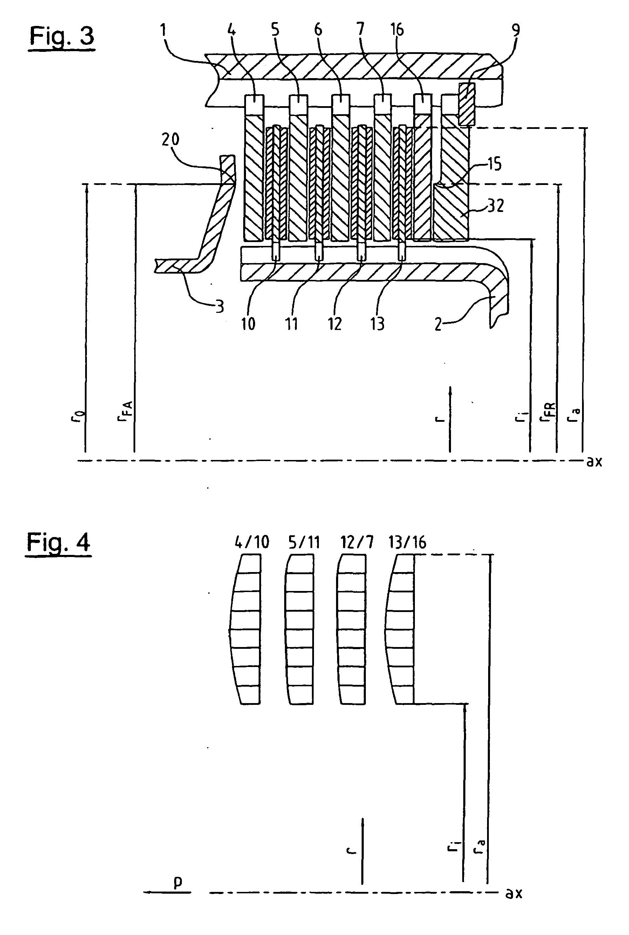

Anstelle einer kegeligen Freiwinkelfläche kann die Rückenplatte auch mit einer stufenförmigen Freiwinkelfläche versehen sein. Stufenförmige Freiwinkelflächen sind einfacher zu fertigen als kegelige Freiwinkelflächen. Ein derartiges Ausführungsbeispiel ist in Figur 3 dargestellt. Zur Vereinfachung der Bezugnahme werden gleiche Bezugszeichen wie im Ausführungsbeispiel gemäß Figur 1 für gleiche Teile verwendet. Eine stufenförmige Rückenplatte 32 ist an dem Außenlamellenträger 1 angeordnet. Die Rückenplatte 32 stützt sich über den Sicherungsring 9 gegen den Außenlamellenträger 1 ab, um die Kraft $F_A$ des axial beweglichen Aktuators 3 aufzunehmen. Dabei wirkt eine durch die Stufe gebildete Ringkuppe 15 als Kraftangriffsradius. Vorteilhafterweise ist auch in diesem Ausführungsbeispiel die zusätzliche Außenlamelle 16 eingesetzt, welche als Gegenplatte wirkt.

Figur 4 zeigt die Flächenpressungsverteilung für das in Figur 3 dargestellte Ausführungsbeispiel der Lamellenkupplung mit der stufenförmigen Rückenplatte 32. Auch bei dieser Gestaltung erhält man eine symmetrische Pressungsverteilung über der ganzen Kupplungslänge, d. h. die Pressung zwischen Lamellen 13 und 16 ist identisch mit der Pressung zwischen Lamellen 4 und 10.

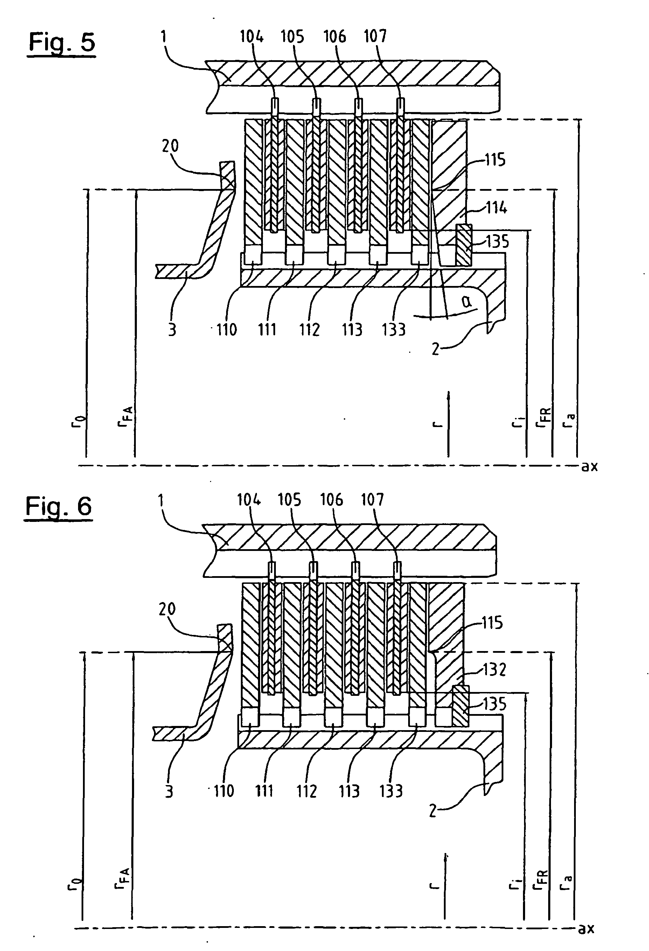

Anstelle der Befestigung der Rückenplatte am Außenlamellenträger 1 kann die Rückenplatte auch am Innenlamellenträger 2 befestigt sein. Ein derartiges Ausführungsbeispiel zeigt Figur 5. Das Lamellenpaket der dargestellten Lamellenkupplung wird aus Außenlamellen 104, 105, 106 und 107 sowie Innenlamellen 110, 111, 112 und 113 gebildet. Dabei sind die Außenlamellen 104, 105, 106 und 107 mit einem Reibbelag beschichtet. Eine Rückenplatte 114 mit einer unter einem Winkel "α" ausgebildeten Freiwinkelfläche ist an dem Innenlamellenträger 2 befestigt und stützt sich über einen Sicherungsring 135 gegen den Innenlamellenträger 2 ab, um die Kraft $F_A$ des axial beweglichen Aktuators 3 aufzunehmen. Dabei wirkt eine durch die Freiwinkelfläche gebildete Ringkuppe 115 als Kraftangriffslinie. Vorteilhafterweise ist eine zusätzliche Innenlamelle 133 zwischen der Außenlamelle 107 und der Rückenplatte 114 eingesetzt.

Im Vergleich zu dem in Figur 5 dargestellten Ausführungsbeispiel weist das in Figur 6 dargestellte Ausführungsbeispiel statt der Rückenplatte 114 mit kegeliger Freiwinkelfläche eine Rückenplatte 132 mit einer Stufe auf, welche wiederum die Ringkuppe 115 bildet. Ansonsten sind die Ausführungsbeispiele gemäß Figur 5 und Figur 6 identisch.

Die Flächenpressungsverteilungen der beiden in den Figuren 5 und 6 dargestellten Ausführungsbeispiel entspricht bei hoher Axialkraft der Flächenpressungsverteilung gemäß Figur 2 bzw. Figur 4.

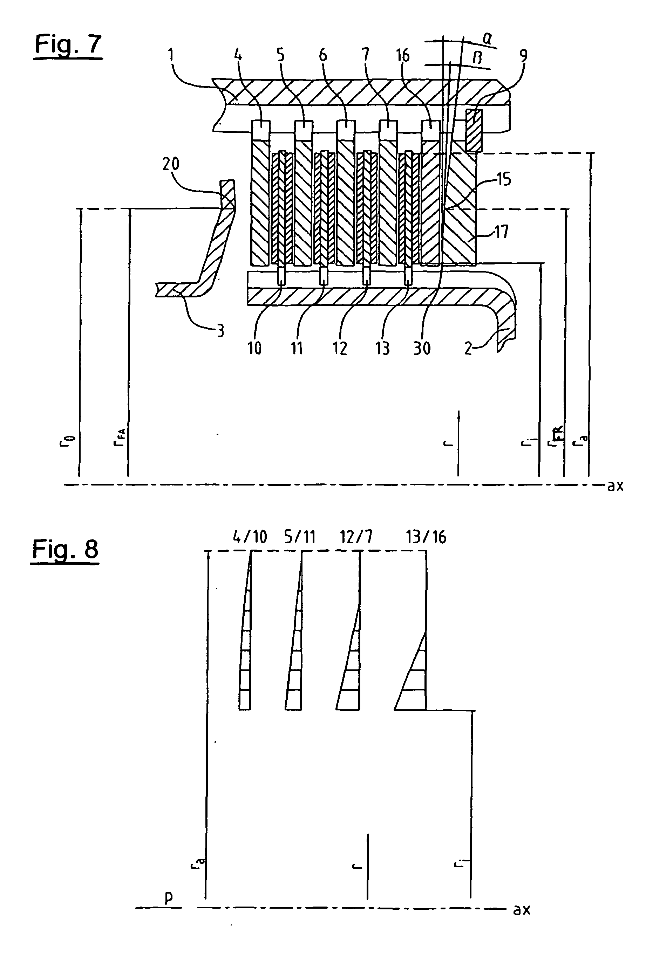

Bei kleinen Drehmomenten, wie sie z. B. beim sogenannten "Kriechen" erforderlich sind, ist es vorteilhaft, wenn die Regelgröße "Drehmoment/Druck" (auch als "clutch gain bezeichnet und in Nm/bar angegeben) möglichst klein ist. Da das Drehmoment einer Kupplung das Produkt aus Reibwert, Anzahl der Reiblamellen, Anpresskraft und Reibradius ist, lässt sich der "clutch gain" beeinflussen, wenn man den Kraftangriffsradius variabel gestaltet. Ein einfaches - noch nicht optimales - Beispiel ist in Figur 7 skizziert, welche die wesentlichen vorstehend genannten Bauteile der Kupplung gemäß Figur 1 identisch aufweist. Zur Vereinfachung der Bezugnahme werden identische Bezugszeichen für identische Teile verwendet.

Eine Rückenplatte 17 erhält in diesem Ausführungsbeispiel zwei Freiwinkelflächen unter den Freiwinkeln "α" und "β". Bei kleinen Anpresskräften $F_A \ll F_{AN}$ wirkt der Kontakt zu Zusatzaußenlamelle 16 vorwiegend am inneren Radius $r_i$, bei größeren Anpresskräften am Radius $r_{FR} \approx r_0$. Bei einer kleinen Axialkraft $F_A \leq$ 5-15% x $F_{AN}$ wird sich somit eine Flächenpressung p(r) ausbilden, wie sie in Figur 8 dargestellt ist.

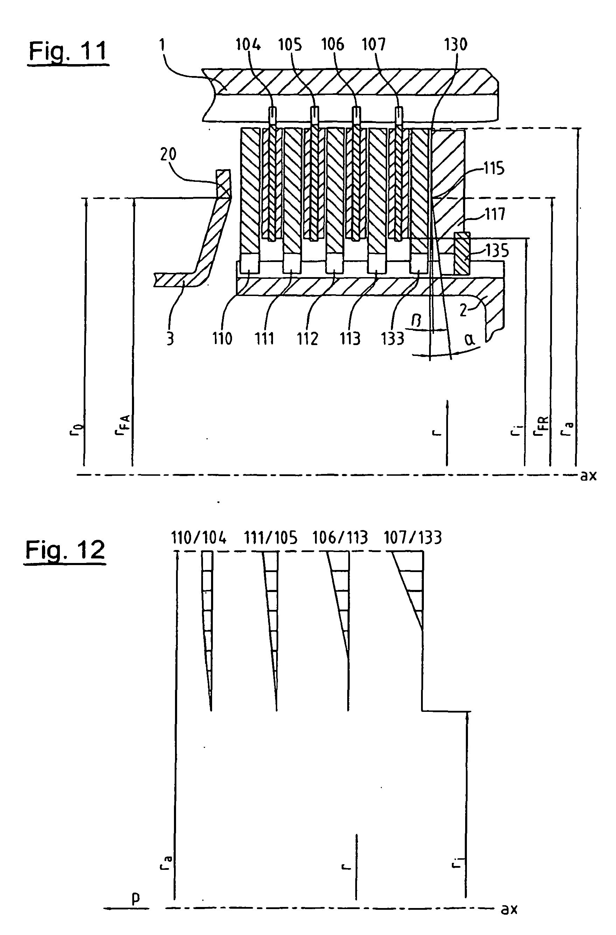

Wird die Rückenplatte statt am Außenlamellenträger 1 am Innenlamellenträger 2 befestigt (Rückenplatte 117 in Figur 11), ergibt sich bei einer kleinen Axialkraft $F_A \leq$ 5-15% x $F_{AN}$ die Flächenpressungsverteilung gemäß Figur 12. Bei kleinen Anpresskräften $F_A \ll F_{AN}$ wirkt der Kontakt zu einer zusätzlichen Innenlamelle 116, welche zwischen der Rückenplatte 117 und der Außenlamelle 107 angeordnet ist, vorwiegend am äußeren Radius $r_a$, bei größeren Anpresskräften am Radius $r_{FR} \approx r_0$. Die weiteren Bestandteile des Ausführungsbeispiels gemäß Figur 11 sind identisch zu denen des Ausführungsbeispiels gemäß Figur 5.

Um eine zu einer Rückenplatte mit zwei Freiwinkelflächen vergleichbare Wirkung mit einer stufenförmigen Rückenplatte zu erzielen, ist es möglich, an der Rückenplatte zwei aufeinanderfolgende Stufen auszubilden (nicht dargestellt). Der Vorteil der stufenförmigen Rückenplatten gegenüber Rückenplatten mit einer oder mehreren Freiwinkelflächen liegt immer in einer besseren Herstellbarkeit, welche sich durch geringere Kosten und höhere Genauigkeit auszeichnet.

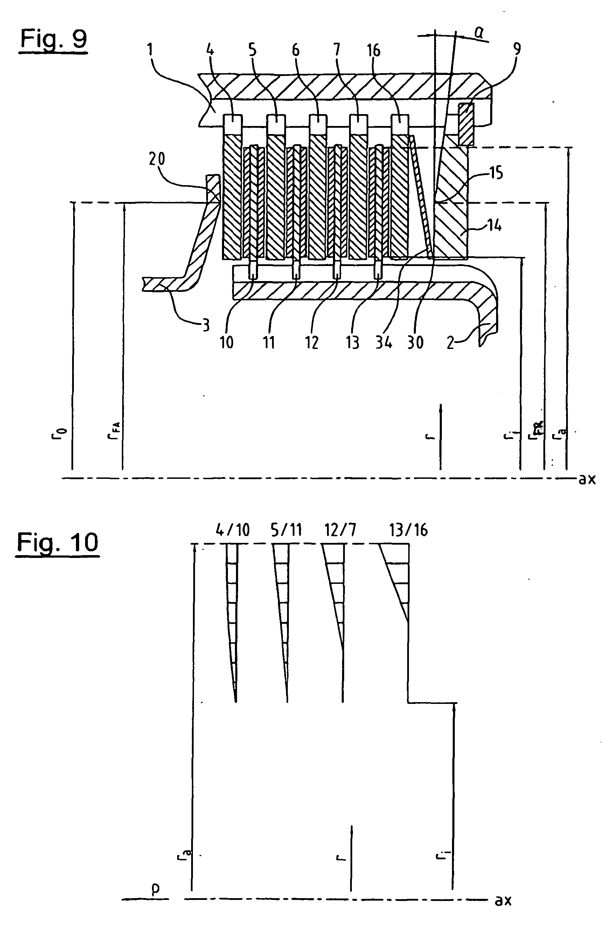

Statt der Ausgestaltung der Rückenplatte mit zwei Freiwinkelflächen bzw. zwei Stufen ist es auch möglich, ein federndes Element zwischen einer Rückenplatte mit einer Freiwinkelfläche bzw. einer Stufe und der als Gegenplatte wirkenden zusätzlichen Lamelle anzubringen. Ausführungsbeispiele zu dieser Ausgestaltung sind in den Figuren 9, 13, 21, 23 und 24 dargestellt.

Die in Figur 9 dargestellte Lamellenkupplung ist analog zur in Figur 1 dargestellten Lamellenkupplung aufgebaut, so dass gleiche Teile mit gleichen Bezugszeichen versehen sind. Zusätzlich weist diese Ausgestaltung der Lamellenkupplung ein federndes Element 34, beispielsweise eine Tellerfeder, auf, welche zwischen der als Gegenplatte wirkenden zusätzlichen Innenlamelle 16 und der Rückenplatte 14 mit einer Freiwinkelfläche angeordnet ist. Dabei liegt das federnde Element 34 am inneren Radius $r_i$ der Reibflächen auf der Rückenplatte 14 auf, während es am äußeren Radius $r_a$ der Reibflächen auf der Gegenplatte 16 anliegt. Durch diese Neigung des federnden Elements 34 wird bewirkt, dass - im Gegensatz zum in Figur 7 dargestellten Ausführungsbeispiel - bei kleinen Anpresskräften $F_A \ll F_{AN}$ der Kontakt zu Lamelle 16 vorwiegend am äußeren Radius $r_a$ wirkt, bei größeren Anpresskräften hingegen am Radius $r_{FR} \approx r_0$. Bei einer kleinen Axialkraft $F_A \leq$ 5-15% x $F_{AN}$ wird sich somit eine Flächenpressung p(r) ausbilden, wie sie in Figur 10 dargestellt ist.

Das federnde Element 34 kann in einer alternativen Ausgestaltung auch über den inneren Radius $r_i$ der Reibflächen hinaus- und in die Verzahnung des Innenlamellenträgers hineinragen (ohne Abbildung). Eine derartige Ausgestaltung hat den Vorteil, dass ein als Tellerfeder ausgebildetes federndes Element bei geöffneter Kupplung sich nicht in Umfangsrichtung bewegen kann, so dass schädlicher Verschleiß an den umgebenden Bauteilen vermieden wird.

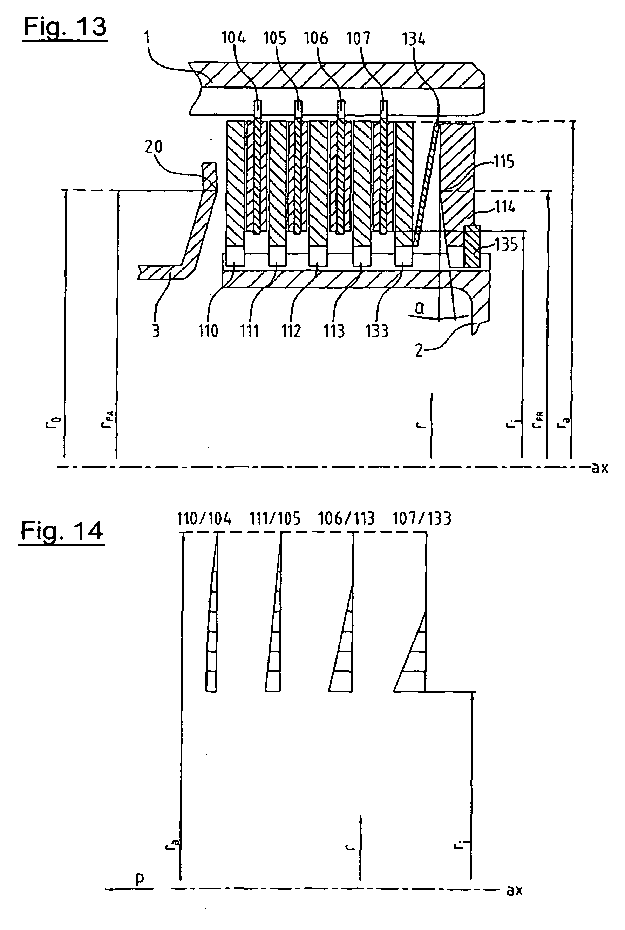

Das in Figur 13 dargestellte Ausführungsbeispiel entspricht einer kinematischen Umkehr des in Figur 9 dargestellten Ausführungsbeispiels. Die Lamellenkupplung ist dabei wie die Lamellenkupplung des Ausführungsbeispiels in Figur 5 aufgebaut, so dass zur vereinfachten Bezugnahme gleiche Bestandteile mit gleichen Bezugszeichen versehen sind.

Die Rückenplatte 114 mit einer Freiwinkelfläche ist am Innenlamellenträger 2 befestigt und stützt sich über den Sicherungsring 135 am Innenlamellenträger 2 ab. Die Gegenplatte 133 ist ebenfalls am Innenlamellenträger 2 angeordnet. Zwischen der Gegenplatte 133 und der Rückenplatte 114 ist ein federndes Element 134 angeordnet, welches beispielsweise durch eine Tellerfeder realisiert ist. Das federnde Element 134 liegt dabei am äußeren Radius $r_a$ der Reibflächen auf der Rückenplatte 114 auf, während es am inneren Radius $r_i$ der Reibflächen auf der Gegenplatte 133 anliegt. Entsprechend ergibt sich eine Flächenpressungsverteilung gemäß Figur 14, bei welcher bei kleinen Anpresskräften $F_A \ll F_{AN}$ der Kontakt zu Lamelle 133 vorwiegend am inneren Radius $r_i$ wirkt.

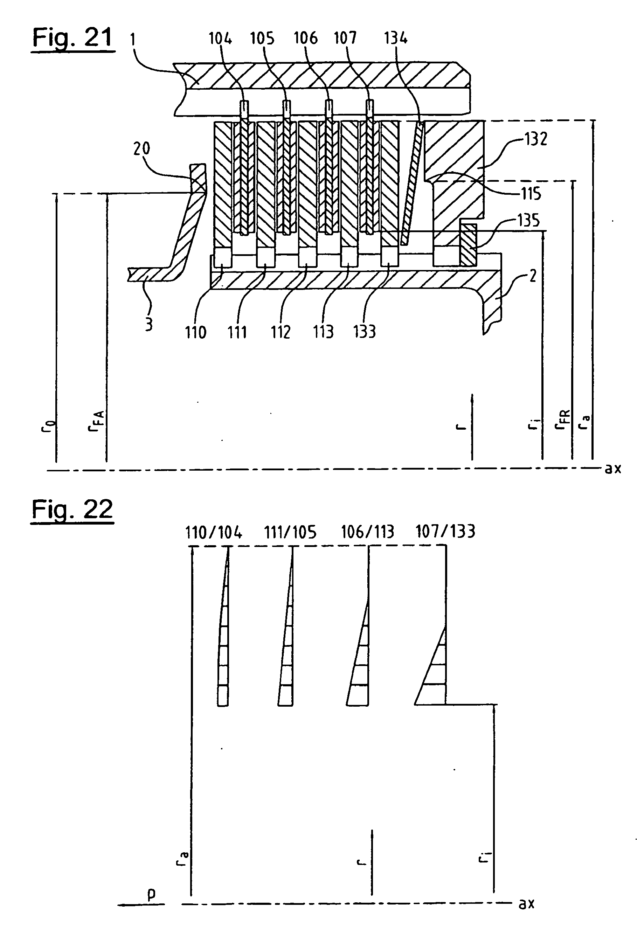

Um eine vergleichbare Wirkung mit einer stufenförmigen Rückenplatte zu erzielen, ist in einem weiteren, in Figur 21 dargestellten Ausführungsbeispiel, welches im wesentlichen analog zum Ausführungsbeispiel gemäß Figur 6 aufgebaut ist, zusätzlich zwischen der stufigen Rückenplatte 132, welche am Innenlamellenträger 2 angeordnet ist, und der Zusatzinnenlamelle 133 ein federndes Element 134, beispielsweise eine Tellerfeder, angeordnet. An die zusätzliche'Innenlamelle 133 schließt sich die Außenlamelle 107 an, welche in diesem Ausführungsbeispiel mit einem Reibbelag ausgestattet ist. Durch die Neigung des federnden Elements 134 analog zum Ausführungsbeispiel in Figur 13, d.h., dass das federnde Element am äußeren Radius $r_a$ der Reibflächen auf der Rückenplatte 132 aufliegt, während es am inneren Radius $r_i$ der Reibflächen auf der Gegenplatte 133 anliegt, ergibt sich eine Flächenpressungsverteilung gemäß Figur 22, bei welcher bei kleinen Anpresskräften $F_A \ll F_{AN}$ der Kontakt zu Lamelle 133 vorwiegend am inneren Radius $r_i$ wirkt.

Das federnde Element 134 kann alternativ auch derart ausgebildet sein, dass es am inneren Radius $r_i$ der Reibflächen auf der Gegenplatte 133 anliegt, während es sich radial nach außen nur bis etwa zum Radius $r_0$ erstreckt und an der Stufe der stufenförmigen Rückenplatte 132 aufliegt.

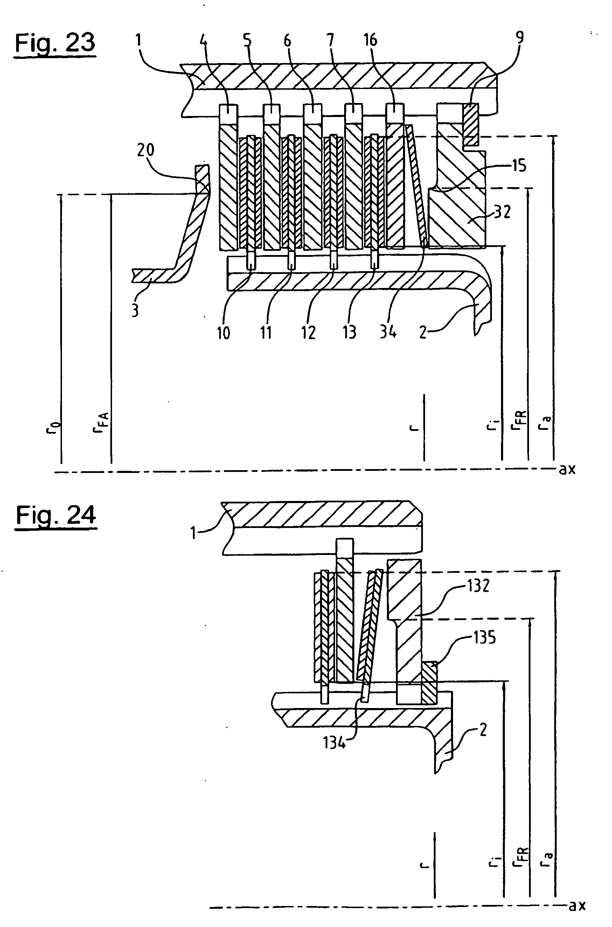

Figur 23 zeigt eine Weiterbildung des Ausführungsbeispiels gemäß Figur 9, bei welchem statt der Rückenplatte 14 mit einer Freiwinkelfläche die stufige Rückenplatte 32 am Außenlamellenträger 1 angeordnet ist, während zwischen der Gegenplatte 16 und der stufigen Rückenplatte 32 das federnde Element 34 wiederum derart angeordnet ist, dass es am inneren Radius $r_i$ der Reibflächen auf der Rückenplatte 32 aufliegt, während es am äußeren Radius $r_a$ der Reibflächen auf der Gegenplatte 16 anliegt.

In einem weiteren Ausführungsbeispiel, welches eine Weiterbildung des Ausführungsbeispiels gemäß Figur 21 darstellt, ist eine Reibscheibe als federndes Element 134 ausgebildet (vgl. Figur 24). Bei Anordnung der Rückenplatte 132 an dem Innenlamellenträger 2 schließt sich an die Rückenplatte 132 somit direkt eine Innenlamelle an, welche federnd ausgebildet ist. Die als federndes Element 134 wirkende Innenlamelle ist im Beispiel mit einem Reibbelag ausgestattet, wobei selbstverständlich der Reibbelag auch an den Außenlamellen angeordnet sein kann.

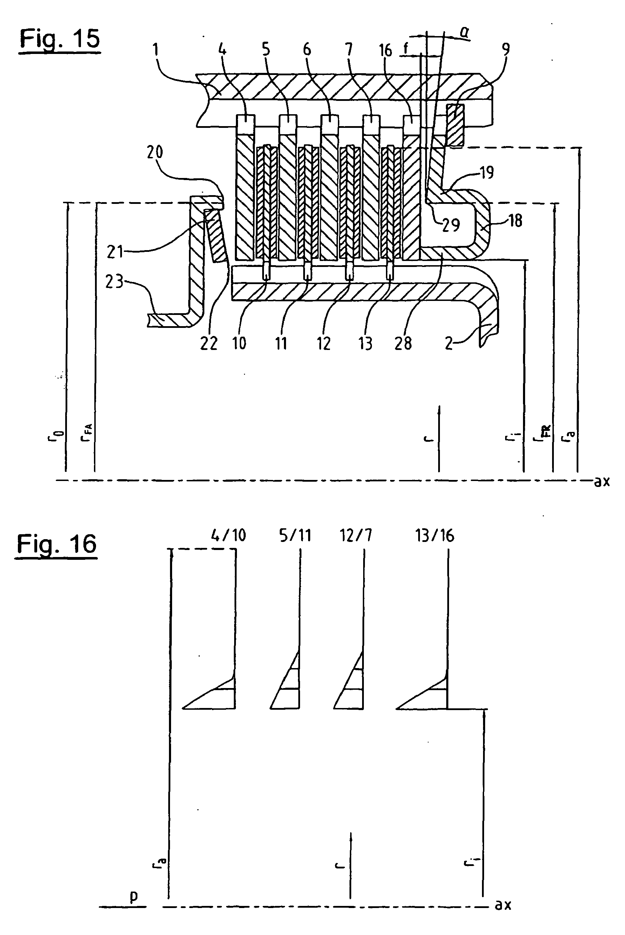

Noch weiter verbessern lässt sich die Situation, wenn auch der Aktuator bzw. Anpresskolben 23 auf der linken Seite einen variablen Kraftangriffsradius erhält. Dies ist in Figur 15 skizziert, wobei das Lamellenpaket dieser Lamellenkupplung analog zur Lamellenkupplung gemäß dem in Figur 7 dargestellten Ausführungsbeispiel aufgebaut ist. Der Kolben 23 erhält ein zusätzliches federndes Element 21, das kleine axiale Kräfte $F_A \ll F_{AN}$ ebenfalls am inneren Radius $r_i$ an der Kante 22 überträgt, bei großen Kräften $F_A \approx F_{AN}$ jedoch so weit durchfedert, dass der Kraftradius $r_{FA} \approx r_0$ an der Ringkuppe 20 des Kolbens 23 zum Tragen kommt.

Als Variante für die Rückenplatte 18 wurde hier ein Tiefziehteil aus Blech dargestellt, das im Prinzip die gleiche Funktionalität aufweist wie die Rückenplatte 17 im Ausführungsbeispiel gemäß Figur 7. Das U-förmige freie Ende der Rückenplatte liegt zunächst mit dem freien Finger 28 auf der Gegenplatte 16 auf. Nach einer ersten Durchfederung um den Federweg vom Betrag "f" kommt das Knie 19 zum Tragen und übernimmt entlang der Ringkuppe 29 den wesentlichen Teil von hohen Axialkräften. Um dies sicherzustellen ist wieder ein Freiwinkel "α" vorgesehen.

Bei kleinen Axialkräften $F_A \ll F_{AN}$ kommt es damit zu einer Flächenpressungsverteilung, wie sie in Figur 16 gezeichnet ist, bei welcher bei kleinen Anpresskräften $F_A \ll F_{AN}$ der Kontakt zu Lamelle 16 vorwiegend am inneren Radius $r_i$ wirkt. Dies führt nicht nur zum Vorteil eines kleineren "clutch gains" bei niedrigen Drücken, sondern die Flächenpressung p ist - bei den erwähnten kleinen Axialkräften $F_A \ll F_{AN}$ und damit absolut gesehen niedrigen Pressungen p - insgesamt höher als bei üblicher Anordnung. Damit wird die Gefahr des Shudders bei kleinen Momenten auf Grund toleranzbedingter Dickenstreuungen der Lamellen bzw. Reibbeläge wesentlich verringert.

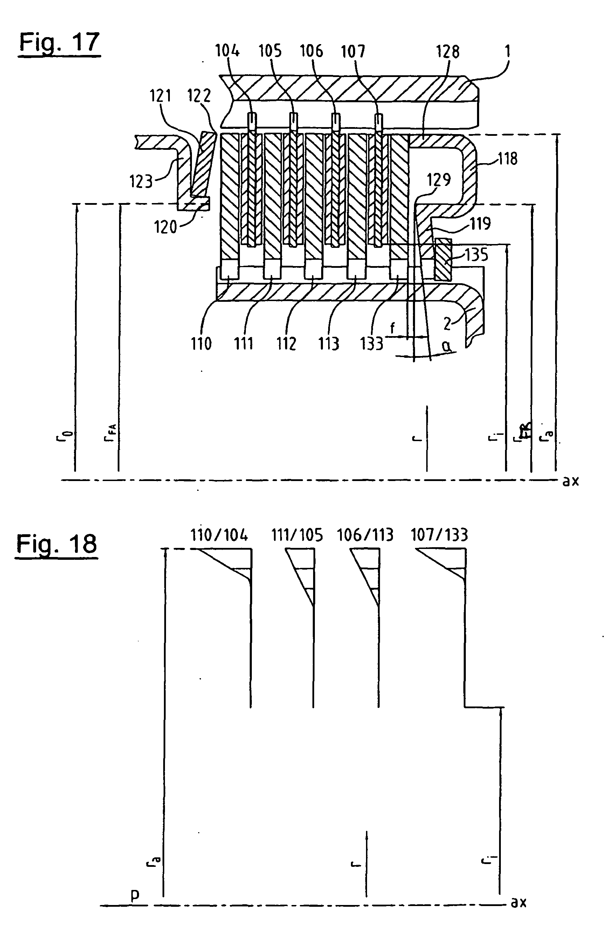

Figur 17 zeigt das Ausführungsbeispiel gemäß Figur 15 in kinematischer Umkehr. Der Kolben 123 erhält ein zusätzliches federndes Element 121, das kleine axiale Kräfte $F_A \ll F_{AN}$ am äußeren Radius $r_a$ an der Kante 122 überträgt, bei großen Kräften $F_A \approx F_{AN}$ jedoch so weit durchfedert, dass der Kraftradius $r_{FA} \approx r_0$ an der Ringkuppe 120 des Kolbens 123 zum Tragen kommt.

Die Rückenplatte 118 ist auch in diesem Ausführungsbeispiel als ein Tiefziehteil aus Blech ausgebildet, welches im Prinzip die gleiche Funktionalität aufweist wie die Rückenplatte 18 im Ausführungsbeispiel gemäß Figur 15, nur dass in diesem Fall die Rückenplatte 118 an dem Innenlamellenträger 2 angeordnet ist und sich über den Stützring 135 am Innenlamellenträger abstützt. Nach einer ersten Durchfederung um den Betrag "f" kommt das Knie 119 zum Tragen und übernimmt entlang der Ringkuppe 129 der Rückenplatte 118 den wesentlichen Teil von hohen Axialkräften. Um dies sicherzustellen ist wieder ein Freiwinkel "α" vorgesehen.

Bei kleinen Axialkräften $F_A \ll F_{AN}$ kommt es damit zu einer Flächenpressungsverteilung, wie sie in Figur 18 gezeichnet ist, wobei bei kleinen Anpresskräften $F_A \ll F_{AN}$ der Kontakt zu Lamelle 133 vorwiegend am äußeren Radius $r_a$ wirkt.

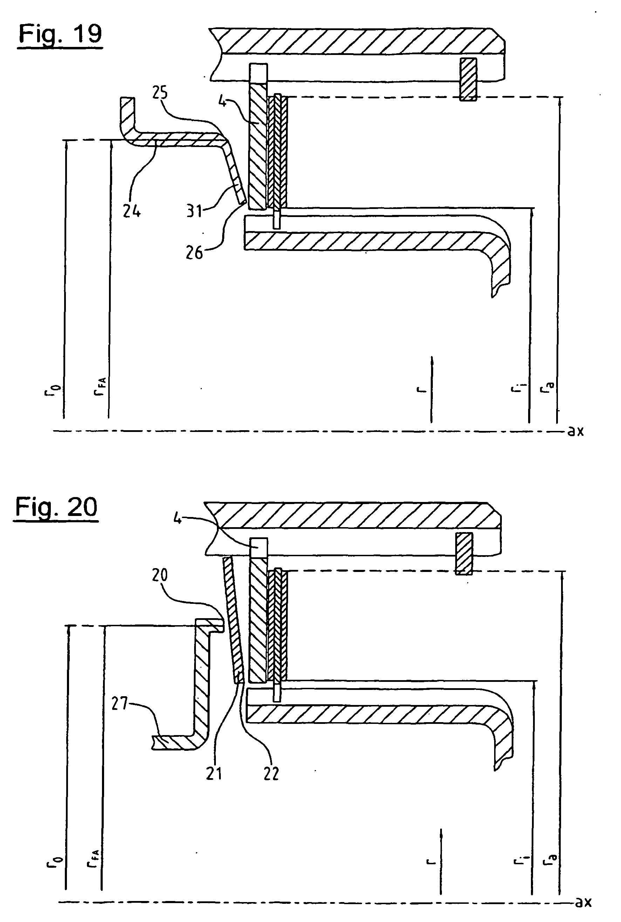

Eine weitere Variante eines Kolbens 24 mit variablem Kraftangriffsradius ist in Figur 19 gezeigt. Hier ist der Kolben 24 so gestaltet, dass dessen "natürliche Verformung" unter Axialkraft $F_A$ zu der gewünschten Veränderung des Kraftangriffsradius $r_{FA}$ führt. Bei kleinen

Anpresskräften $F_A \ll F_{AN}$ sitzt die Innenkante 26 des im Axialquerschnitt L-förmigen Kolbens 24 am Innenradius $r_i$ der Anpressplatte 4 auf. Eine Erhöhung des Anpressdrucks führt zu einer Verbiegung des unteren Schenkels 31 der L-Form. Das Knie 25 der L-Form schiebt sich dadurch in axialer Richtung zur Anpressplatte 4 hin, wo es schließlich aufsitzt. Eine weitere Erhöhung des Anpressdrucks $F_A$ auf $F_{AN}$ hat zur Folge, dass der Kraftangriffsradius $r_{FA}$ im Wesentlichen durch den Aufsetzpunkt des Knies 25 vorgegeben wird.

Die Durchfederung des unteren Schenkels 31 der L-Form ist dabei z. B. so gewählt, dass bei kleineren Anpresskräften von z. B. $F_A \approx 500N$ der Krafteintrag am Innenradius $r_i$ der Anpressplatte 4 wirkt und bei hohen Anpresskräften von z. B. $F_A = F_{AN} = 10.000N$ am Innenradius $r_i$ weiterhin etwa 500N anliegen und die übrige Kraft im Wesentlichen am Knie 25 abfällt. Der mittlere Kraftangriffsradius $r_{FA}$ fällt damit im Wesentlichen mit der Position des Knies 25 zusammen.

Schließlich zeigt die Figur 20 ein weiteres Ausführungsbeispiel eines Kolbens 27 mit variablem Kraftangriffsradius. Während in diesem Ausführungsbeispiel der Aktuator 27 in an sich bekannter Art ausgeführt ist und eine Ringkuppe 20 aufweist, welche im Wesentlichen am optimalen Kraftangriffsradius $r_{FA0}$ für hohe Anpresskräfte angeordnet ist, ist zusätzlich ein federndes Element, bspw. eine Tellerfeder 21 mit äußeren und inneren Abmessungen vorgesehen, die im Wesentlichen mit dem Außenradius $r_a$ und dem Innenradius $r_i$ der Reibflächen der Reiblamellen 4 übereinstimmen. Dabei liegt die Tellerfeder 21 am inneren Radius $r_i$ auf der Anpressplatte 4 auf und verläuft radial nach außen von der Anpressplatte 4 weg. Radial etwa mittig stützt sich die Tellerfeder 21 gegen die Ringkuppe 20 des Aktuators 27 ab, am Innenradius gegen die Anpressplatte 4.

Die Elastizität der Tellerfeder 21 ist so gewählt, dass der Krafteintrag bei kleinen Anpresskräften $F_A \ll F_{AN}$ über die Innenkante 22 der Tellerfeder 21 am Innenradius $r_i$ der Anpressplatte 4 erfolgt. Bei hohen Anpresskräften $F_A \approx F_{AN}$ liegt die Feder 21 im wesentlichen plan auf der Anpressplatte 4 auf, so dass ein von der Ringkuppe 20 ausgehender Krafteintrag im Wesentlichen ganzflächig auf die Anpressplatte 4 übertragen wird. Der mittlere Kraftangriffsradius $r_{FA}$ beträgt auch hier $r_{FA} \approx r_{FA0}$.

Alternativ kann die Tellerfeder 21 auch so geneigt sein, dass sie am äußeren Radius $r_a$ der Anpressplatte 4 auf der Anpressplatte 4 aufliegt und radial nach innen von der Anpressplatte 4 weg verläuft (ohne Abbildung). In diesem Fall erfolgt bei geeigneter Wahl der Elastizität der Tellerfeder der Krafteintrag bei kleinen Anpresskräften $F_A \ll F_{AN}$ über die Außenkante der Tellerfeder 21 am Außenradius $r_a$ der Anpressplatte 4.

Für die konstruktive Gestaltung der variablen Kraftangriffsradien lassen sich noch andere Möglichkeiten finden, wie z. B. gewölbte statt geknickte Flächen für einen fließenden Übergang oder ähnliches.

Bezugszeichenliste

| | |
|---|---|
| 1 | Außenlamellenträger |
| 2 | Innenlamellenträger |
| 3 | Aktuator |
| 4 | Außenlamelle (Andrucklamelle/Andruckplatte) |
| 5 | Außenlamelle |
| 6 | Außenlamelle |
| 7 | Außenlamelle |
| 8 | Rückenplatte |
| 9 | Sicherungsring |
| 10 | Innenlamelle (mit Reibbelag) |
| 11 | Innenlamelle (mit Reibbelag) |
| 12 | Innenlamelle (mit Reibbelag) |
| 13 | Innenlamelle (mit Reibbelag) |
| 14 | Rückenplatte |
| 15 | Ringkuppe |
| 16 | Zusatzaußenlamelle (Gegenplatte) |
| 17 | Rückenplatte |
| 18 | Rückenplatte |
| 19 | Knie |
| 20 | Ringkuppe |
| 21 | federndes Element |
| 22 | Kante |
| 23 | Kolben |
| 24 | Kolben |
| 25 | Knie |
| 26 | Innenkante |
| 27 | Aktuator |
| 28 | Finger |
| 29 | Ringkuppe |
| 30 | Ringkuppe |
| 31 | Schenkel |
| 32 | Rückenplatte |
| 34 | federndes Element |
| 104 | Außenlamelle (Andrucklamelle/Andruckplatte) |
| 105 | Außenlamelle |
| 106 | Außenlamelle |
| 107 | Außenlamelle |
| 110 | Innenlamelle |
| 111 | Innenlamelle |
| 112 | Innenlamelle |
| 113 | Innenlamelle |
| 114 | Rückenplatte |
| 115 | Ringkuppe |
| 117 | Rückenplatte |
| 118 | Rückenplatte |
| 119 | Knie |
| 120 | Ringkuppe |
| 121 | Federndes Element |
| 122 | Kante |
| 123 | Kolben |
| 128 | Finger |
| 129 | Ringkuppe |
| 130 | Ringkuppe |
| 132 | Rückenplatte |

| | |
|---|---|
| 133 | Zusatzinnenlamelle (Gegenplatte) |
| 134 | federndes Element |
| 135 | Sicherungsring |
| $r_m$ | mittlerer Reibradius |
| $r_i$ | Innenradius der Reibfläche |
| $r_a$ | Außenradius der Reibfläche |
| $r_{FA}$ | mittlerer Kraftangriffsradius des Aktuators |
| $r_{FR}$ | mittlerer Kraftangriffsradius der Rückenplatte |
| $F_A$ | Anpresskraft des Aktuators |
| $F_{AN}$ | Nennanpresskraft |
| $F_R$ | Gegenkraft der Rückenplatte |
| $r$ | Radius |
| $r_{FA0}$ | optimaler Kraftangriffsradius |
| ax | Drehachse |
| $p$ | Flächenpressung |
| $\alpha$ | Freiwinkel |
| $\beta$ | Freiwinkel |
| $f$ | Federweg |
| $p_i$ | Flächenpressung am Innenradius |
| $p_a$ | Flächenpressung am Außenradius |
| $T$ | Drehmoment |
| $T_N$ | Nenndrehmoment |

**Patentansprüche**

1. Lamellenkupplung

   - mit von einem um eine Drehachse (ax) drehbaren Außenlamellenträger (1) getragenen Außenlamellen (4, 5, 6, 7, 16, 104, 105, 106, 107,) und mit von einem um die Drehachse (ax) drehbaren Innenlamellenträger (2) getragenen Innenlamellen (10, 11, 12, 13, 110, 111, 112, 113, 133), wobei die Außenlamellen (4, 5, 6, 7, 16, 104, 105, 106, 107) und die Innenlamellen (10, 11, 12, 13, 110, 111, 112, 113, 133) ein Lamellenpaket bilden

   - mit einem axial beweglichen Aktuator (3, 23, 24, 27, 123), welcher beim Betätigen auf einem mittleren Kraftangriffsradius ($r_{FA}$) bezüglich der Drehachse (ax) eine Anpresskraft ($F_A$) auf eine eine Andruckplatte (4, 104) bildende Lamelle des Lamellenpakets überträgt.

   - mit einer Rückenplatte (8, 14, 17, 18, 32, 114, 117, 118, 132), welche beim Betätigen des Aktuators (3, 23, 24, 27, 123) auf einem mittleren Kraftangriffsradius ($r_{FR}$) bezüglich der Drehachse (ax) eine Gegenkraft ($F_R$) auf eine eine Gegenplatte (16, 133) bildende Lamelle des Lamellenpakets überträgt, wobei

   - die Lamellen (4, 5, 6, 7, 16, 10, 11, 12, 13, 104, 105, 106, 107, 108, 110, 111, 112, 113, 133) in reibschlüssigen Kontakt mit einem mittleren Reibradius ($r_m$) verbracht werden und ein Drehmoment (T) übertragen,

   - wobei das Verhältnis der mittleren Kraftangriffsradien ($r_{FA}$, $r_{FR}$) zum mittleren Reibradius ($r_m$) bei einer Anpresskraft ($F_A$), welche in etwa der zu einer Übertragung des Nenndrehmoments ($T_N$) notwendigen Nennanpresskraft ($F_{AN}$) entspricht, kleiner oder gleich eins und größer als 0,97 ist,

**dadurch gekennzeichnet, dass** der mittlere Kraftangriffsradius ($r_{FA}$) des Aktuators (3, 23, 24, 27, 123) und/oder der mittlere Kraftangriffsradius ($r_{FR}$) der Rückenplatte (14, 17, 18, 32, 114, 132) derart in Abhängigkeit von der Anpresskraft ($F_A$) veränderbar ist bzw. sind, dass bei einer Anpresskraft ($F_A$) kleiner der Nennanpresskraft ($F_{AN}$) entweder einer oder beide mittlere Kraftangriffsradien ($r_{FA}$, $r_{FR}$) zwischen dem mittleren Reibradius ($r_m$) und einem inneren Radius ($r_i$) der Reibflächen der Lamellen liegt bzw. liegen oder einer oder beide mittlere Kraftangriffsradien ($r_{FA}$, $r_{FR}$) zwischen dem mittleren Reibradius ($r_m$) und einem äußeren Radius ($r_a$) der Reibflächen der Lamellen liegt bzw. liegen.

2. Lamellenkupplung nach Anspruch 1,
**dadurch gekennzeichnet, dass** das Verhältnis der mittleren Kraftangriffsradien ($r_{FA}$, $r_{FR}$) zum mittleren Reibradius ($r_m$) bei einer Anpresskraft ($F_A$), welche in etwa der Nennanpresskraft ($F_{AN}$) entspricht, größer als 0,99, vorzugsweise 0,997 ist.

3. Lamellenkupplung nach Anspruch 1 oder 2,
**dadurch gekennzeichnet, dass** die mittleren Kraftangriffsradien ($r_{FA}$, $r_{FR}$) bei einer Anpresskraft ($F_A$), welche in etwa der Nennanpresskraft ($F_{AN}$) entspricht, identisch oder nahezu identisch sind.

4. Lamellenkupplung nach einem der Ansprüche 1 bis 3,
**dadurch gekennzeichnet, dass** die Rückenplatte (14, 17, 18, 32, 114, 117, 118, 132) radial außerhalb des mittleren Reibradius ($r_m$) eine Freiwinkelfläche aufweist, wenn sie axial an dem Außenlamellenträger abgestützt ist bzw. dass die Rückenplatte radial innerhalb des mittleren Reibradius eine Freiwinkelfläche aufweist, wenn sie axial am Innenlamellenträger abgestützt ist.

5. Lamellenkupplung nach Anspruch 4,
**dadurch gekennzeichnet, dass** die Freiwinkelfläche kegelförmig oder stufenförmig ausgebildet ist.

6. Lamellenkupplung nach einem der vorangegangenen Ansprüche,
**dadurch gekennzeichnet, dass** die Rückenplatte (14, 17, 18, 32, 114, 117, 118, 132) und/oder der Aktuator (3, 23, 24, 27, 123) eine mit der Andruckplatte (4, 104) bzw. der Gegenplatte (16, 133) beim Betätigen in Wirkverbindung tretende Ringkuppe (15, 20, 22, 26, 28, 29, 30, 115, 120, 122, 128, 129, 130) aufweist bzw. Ringkuppen (15, 20, 22, 26, 28, 29, 30, 115, 120, 122, 128, 129, 130) aufweisen.

7. Lamellenkupplung nach Anspruch 6,
**dadurch gekennzeichnet, dass** die Ringkuppe (15, 20, 29, 115, 120, 129) bzw. die Ringkuppen (15, 20, 29, 115, 120, 129) radial am Ort des entsprechenden mittleren Kraftangriffsradius ($r_{FA}$, $r_{FR}$) bei einer Anpresskraft ($F_A$), welche in etwa der Nennanpresskraft ($F_{AN}$) entspricht, angeordnet ist bzw. sind.

8. Lamellenkupplung nach einem der vorangegangenen Ansprüche,
**dadurch gekennzeichnet, dass** der mittlere Kraftangriffsradius ($r_{FA}$) des Aktuators (3, 23, 24, 27, 123) und/oder der mittlere Kraftangriffsradius ($r_{FR}$) der Rückenplatte (14, 17, 18, 32, 114, 132) bei einer Anpresskraft ($F_A$), welche in etwa bis zu 30 %, vorzugsweise bis zu 5 % bis 15 % der Nennanpresskraft ($F_{AN}$) entspricht, zwischen dem mittleren Reibradius ($r_m$) und einem inneren Radius ($r_i$) der Reibflächen der Lamellen liegt bzw. liegen.

9. Lamellenkupplung nach Anspruch 8,
**dadurch gekennzeichnet, dass** der mittlere Kraftangriffsradius ($r_{FA}$) des Aktuators (3, 23, 24, 27, 123) und/oder der mittlere Kraftangriffsradius ($r_{FR}$) der Rückenplatte (14, 17, 18, 32, 114, 132) bei einer Anpresskraft ($F_A$), welche in etwa bis zu 30 %, vorzugsweise bis zu 5 % bis 15 % der Nennanpresskraft ($F_{AN}$) entspricht im inneren Fünftel zwischen dem mittleren Reibradius und dem inneren Radius ($r_i$) der Reibflächen der Lamellen liegt bzw. liegen.

10. Lamellenkupplung nach Anspruch 9,
**dadurch gekennzeichnet, dass** der mittlere Kraftangriffsradius ($r_{FA}$) des Aktuators (3, 23, 24, 27) und/oder der mittlere Kraftangriffsradius ($r_{FR}$) der Rückenplatte (14, 17, 18, 32, 114, 132) bei einer Anpresskraft ($F_A$), welche bis zu in etwa 30 %, vorzugsweise etwa 5 % bis 15 % der Nennanpresskraft ($F_{AN}$) entspricht, am inneren Radius ($r_i$) der Reibflächen der Lamellen liegt bzw. liegen.

11. Lamellenkupplung nach einem der Ansprüche 8 bis 10,
**dadurch gekennzeichnet, dass** die mittleren Kraftangriffsradien ($r_{FA}$, $r_{FR}$) des Aktuators (3, 23, 24, 27) und der Rückenplatte (14, 17, 18, 32, 114, 132) bei einer Anpresskraft ($F_A$), welche in etwa bis zu 30 %, vorzugsweise etwa bis zu 5 % bis 15 % der Nennanpresskraft ($F_{AN}$) entspricht, identisch sind.

12. Lamellenkupplung nach einem der Ansprüche 8 bis 11,
**dadurch gekennzeichnet, dass** die Rückenplatte (14, 17, 18, 32) radial außerhalb des inneren Radius ($r_i$) wenigstens eine Freiwinkelfläche aufweist, wenn

die Rükkenplatte axial am Außenlamellenträger abgestützt ist.

**13.** Lamellenkupplung nach Anspruch 12, **dadurch gekennzeichnet, dass** die wenigstens eine Freiwinkelfläche kegelförmig oder stufenförmig ausgebildet ist.

**14.** Lamellenkupplung nach einem der Ansprüche 8 bis 13, **dadurch gekennzeichnet, dass** die Rückenplatte (14, 17, 18, 32, 114, 132) und/oder der Aktuator (3, 23, 24, 27) eine mit der Andruckplatte (4, 104) bzw. der Gegenplatte (16, 133) beim Betätigen in Wirkverbindung tretende Ringkuppe (15, 20, 22, 26, 28, 29, 30, 115, 130) aufweist bzw. Ringkuppen (15, 20, 22, 26, 28, 29, 30, 115, 130) aufweisen.

**15.** Lamellenkupplung nach Anspruch 14, **dadurch gekennzeichnet, dass** die Ringkuppe (15, 20, 22, 26, 28, 29, 30, 115, 130) bzw. die Ringkuppen (15, 20, 22, 26, 28, 29, 30, 115, 130) am Ort des entsprechenden mittleren Kraftangriffsradius ($r_{FA}$, $r_{FR}$) bei einer Anpresskraft ($F_A$), welche in etwa bis zu 30 %, vorzugsweise etwa bis zu 5 % bis 15 % der Nennanpresskraft ($F_{AN}$) entspricht, angeordnet ist.

**16.** Lamellenkupplung nach einem der Ansprüche 8 bis 15, **dadurch gekennzeichnet, dass** der Aktuator (3, 23, 24, 27, 123) und/oder die Rückenplatte (14, 18, 32, 114, 132) ein federndes Element (18, 21, 134) aufweist bzw. aufweisen, welches bzw. welche bei einer Anpresskraft ($F_A$), welche in etwa bis zu 30 %, vorzugsweise etwa bis zu 5 % bis 15 % der Nennanpresskraft ($F_{AN}$) entspricht, die Anpresskraft ($F_A$) am inneren Radius ($r_i$) oder nahe am inneren Radius ($r_i$) überträgt bzw. übertragen.

**17.** Lamellenkupplung nach Anspruch 16, **dadurch gekennzeichnet, dass** das federnde Element eine Tellerfeder (21, 134) ist bzw. dass die federnden Elemente Tellerfedern (21, 134) sind.

**18.** Lamellenkupplung nach Anspruch 16, **dadurch gekennzeichnet, dass** das federnde Element bzw. die federnden Elemente durch eine entsprechende Formgebung des Aktuators (24) und/oder der Rückenplatte (18) gebildet ist bzw. sind.

**19.** Lamellenkupplung nach Anspruch 18, **dadurch gekennzeichnet, dass** die Rückenplatte (18) im Axialhalbschnitt hakenförmig ausgebildet ist mit einem radial im Bereich des inneren Radius ($r_i$) angeordneten Finger (28) und einem radial im Bereich des mittleren Reibradius ($r_m$) angeordneten Knie (19).

**20.** Lamellenkupplung nach Anspruch 19, **dadurch gekennzeichnet, dass** das Knie (19) bis zu einer Anpresskraft ($F_A$) von etwa 30 %, vorzugsweise etwa 5 % bis 15 % der Nennanpresskraft ($F_{AN}$) von der Gegenplatte (16) beabstandet ist.

**21.** Lamellenkupplung nach einem der Ansprüche 19 bis 20, **dadurch gekennzeichnet, dass** der Aktuator (24) im Axialhalbschnitt L-förmig ausgebildet ist mit einem inneren Schenkel (31), welcher sich im Bereich des inneren Radius ($r_i$) befindet und mit einem radial im Bereich des mittleren Reibradius ($r_m$) angeordneten Knie (25).

**22.** Lamellenkupplung nach Anspruch 21, **dadurch gekennzeichnet, dass** das Knie (25) bis zu einer Anpresskraft ($F_A$) von bis zu etwa 30 %, vorzugsweise etwa 5 % bis 15 % der Nennanpresskraft ($F_{AN}$) von der Anpressplatte (4) beabstandet ist.

**23.** Lamellenkupplung nach einem der Ansprüche 1 bis 7, **dadurch gekennzeichnet, dass** der mittlere Kraftangriffsradius ($r_{FA}$) des Aktuators (3, 23, 123) und/oder der mittlere Kraftangriffsradius ($r_{FR}$) der Rückenplatte (14, 32, 114, 117, 118, 132) bei einer Anpresskraft ($F_A$), welche in etwa bis zu 30 %, vorzugsweise bis zu 5 % bis 15 % der Nennanpresskraft ($F_{AN}$) entspricht, zwischen dem mittleren Reibradius ($r_m$) und einem äußeren Radius ($r_a$) der Reibflächen der Lamellen liegt bzw. liegen.

**24.** Lamellenkupplung nach Anspruch 23, **dadurch gekennzeichnet, dass** der mittlere Kraftangriffsradius ($r_{FA}$) des Aktuators (3, 23, 123) und/oder der mittlere Kraftangriffsradius ($r_{FR}$) der Rückenplatte (14, 32, 114, 117, 118, 132) bei einer Anpresskraft ($F_A$), welche in etwa bis zu 30 %, vorzugsweise bis zu 5 % bis 15 % der Nennanpresskraft ($F_{AN}$) entspricht im äußeren Fünftel zwischen dem mittleren Reibradius und dem äußeren Radius ($r_a$) der Reibflächen der Lamellen liegt bzw. liegen.

**25.** Lamellenkupplung nach Anspruch 24, **dadurch gekennzeichnet, dass** der mittlere Kraftangriffsradius ($r_{FA}$) des Aktuators (3, 23, 123) und/oder der mittlere Kraftangriffsradius ($r_{FR}$) der Rückenplatte (14, 32, 114, 117, 118, 132) bei einer Anpresskraft ($F_A$), welche bis zu in etwa 30 %, vorzugsweise etwa 5 % bis 15 % der Nennanpresskraft ($F_{AN}$) entspricht, am äußeren Radius ($r_a$) der Reibflächen der Lamellen liegt bzw. liegen.

**26.** Lamellenkupplung nach einem der Ansprüche 23 bis 25, **dadurch gekennzeichnet, dass** die mittleren Kraftangriffsradien ($r_{FA}$, $r_{FR}$) des Aktuators (3, 23, 123) und der Rückenplatte (14, 32, 114, 117, 118, 132) bei einer Anpresskraft (F$_A$), welche in etwa bis zu 30 %, vorzugsweise etwa bis zu 5 % bis 15 % der Nennanpresskraft (F$_{AN}$) entspricht, identisch sind.

27. Lamellenkupplung nach einem der Ansprüche 23 bis 26, **dadurch gekennzeichnet, dass** die Rückenplatte (114, 117, 118, 132) radial innerhalb des äußeren Radius (r$_a$) wenigstens eine Freiwinkelfläche aufweist, wenn die Rückenplatte axial am Innenlamellenträger abgestützt ist.

28. Lamellenkupplung nach Anspruch 27, **dadurch gekennzeichnet, dass** die wenigstens eine Freiwinkelfläche kegelförmig oder stufenförmig ausgebildet ist.

29. Lamellenkupplung nach einem der Ansprüche 23 bis 28, **dadurch gekennzeichnet, dass** die Rückenplatte (14, 32, 114, 117, 118, 132) und/oder der Aktuator (3, 23, 24, 27, 123) eine mit der Andruckplatte (4, 104) bzw. der Gegenplatte (16, 33) beim Betätigen in Wirkverbindung tretende Ringkuppe (15, 20, 30, 115, 120, 122, 129, 130) aufweist bzw. Ringkuppen (15, 20, 30, 115, 120, 122, 129, 130) aufweisen.

30. Lamellenkupplung nach Anspruch 29, **dadurch gekennzeichnet, dass** die Ringkuppe (15, 20, 30, 115, 120, 122, 129, 130) bzw. die Ringkuppen (15, 20, 30, 115, 120, 122, 129, 130) am Ort des entsprechenden mittleren Kraftangriffsradius (r$_{FA}$, r$_{FR}$) bei einer Anpresskraft (F$_A$), welche in etwa bis zu 30 %, vorzugsweise etwa bis zu 5 % bis 15 % der Nennanpresskraft (F$_{AN}$) entspricht, angeordnet ist.

31. Lamellenkupplung nach einem der Ansprüche 23 bis 30, **dadurch gekennzeichnet, dass** der Aktuator (3, 23, 123) und/oder die Rückenplatte (14, 32, 118) ein federndes Element (34, 118, 121) aufweist bzw. aufweisen, welches bzw. welche bei einer Anpresskraft (F$_A$), welche in etwa bis zu 30 %, vorzugsweise etwa bis zu 5 % bis 15 % der Nennanpresskraft (F$_{AN}$) entspricht, die Anpresskraft (F$_A$) am äußeren Radius (r$_a$) oder nahe am äußeren Radius (r$_a$) überträgt bzw. übertragen.

32. Lamellenkupplung nach Anspruch 31, **dadurch gekennzeichnet, dass** das federnde Element eine Tellerfeder (34, 121) ist bzw. dass die federnden Elemente Tellerfedern (34, 121) sind.

33. Lamellenkupplung nach Anspruch 31, **dadurch gekennzeichnet, dass** das federnde Element bzw. die federnden Elemente durch eine entsprechende Formgebung des Aktuators und/oder der Rückenplatte (118) gebildet ist bzw. sind.

34. Lamellenkupplung nach Anspruch 33, **dadurch gekennzeichnet, dass** die Rückenplatte (118) im Axialhalbschnitt hakenförmig ausgebildet ist mit einem radial im Bereich des äußeren Radius (r$_a$) angeordneten Finger (128) und einem radial im Bereich des mittleren Reibradius (r$_m$) angeordneten Knie (119), wenn die Rückenplatte (118) axial am Innenlamellenträger (2) abgestützt ist.

35. Lamellenkupplung nach Anspruch 34, **dadurch gekennzeichnet, dass** das Knie (119) bis zu einer Anpresskraft (F$_A$) von etwa 30 %, vorzugsweise etwa 5 % bis 15 % der Nennanpresskraft (F$_{AN}$) von der Gegenplatte (133) beabstandet ist.

36. Lamellenkupplung nach einem der Ansprüche 33 bis 35, **dadurch gekennzeichnet, dass** der Aktuator (3, 123) im Axialhalbschnitt L-förmig ausgebildet ist mit einem äußeren Schenkel, welcher sich im Bereich des äußeren Radius (r$_a$) befindet und mit einem radial im Bereich des mittleren Reibradius (r$_m$) angeordneten Knie.

37. Lamellenkupplung nach Anspruch 36, **dadurch gekennzeichnet, dass** das Knie bis zu einer Anpresskraft (F$_A$) von bis zu etwa 30 %, vorzugsweise etwa 5 % bis 15 % der Nennanpresskraft (F$_{AN}$) von der Anpressplatte (4) beabstandet ist.

38. Lamellenkupplung nach einem der vorangegangenen Ansprüche, **dadurch gekennzeichnet, dass** die Rückenplatte (14, 17, 18, 32, 114, 117, 118, 132) drehfest mit dem Außenlamellenträger (1) oder dem Innenlamellenträger (2) verbunden ist und dass die Gegenplatte (16, 133) mit demselben Lamellenträger (1, 2) verbunden ist wie die Rükkenplatte (14, 17, 18, 32, 114, 117, 118, 132).

39. Lamellenkupplung nach Anspruch 38, **dadurch gekennzeichnet, dass** sich die Rückenplatte (14, 17, 18, 32, 114, 117, 118, 132) über einen Sicherungsring (9, 135) gegen den Lamellenträger (1, 2) abstützt, mit dem die Rückenplatte (14, 17, 18, 32, 114, 117, 118, 132) drehfest verbunden ist.

## Claims

1. Multi-disc clutch

    - having outer discs (4, 5, 6, 7, 16, 104, 105, 106, 107), which are supported by an outer disc carrier (1) that can be rotated about an axis of rotation (ax), and having inner discs (10, 11, 12, 13, 110, 111, 112, 113, 133), which are supported by an inner disc carrier (2) that can be rotated about the axis of rotation (ax), wherein the outer discs (4, 5, 6, 7, 16, 104, 105, 106, 107) and the inner discs (10, 11, 12, 13, 110, 111, 112, 113, 133) form a disc pack,
- having an axially movable actuator (3, 23, 24, 27, 123), which transmits a contact force ($F_A$) to a disc pack disc forming a contact pressure plate (4, 104) at a mean force application radius ($r_{FA}$) with respect to the axis of rotation (ax) when actuated,
- having a back plate (8, 14, 17, 18, 32, 114, 117, 118, 132), which transmits a counterforce ($F_R$) to a disc pack disc forming a counterplate (16, 133) at a mean force application radius ($r_{FR}$) with respect to the axis of rotation (ax) when the actuator (3, 23, 24, 27, 123) is actuated, wherein
- the discs (4, 5, 6, 7, 16, 10, 11, 12, 13, 104, 105, 106, 107, 108, 110, 111, 112, 113, 133) are brought into frictional contact with a mean friction radius ($r_m$) and transmit a torque (T),
- wherein the ratio of the mean force application radii ($r_{FA}$, $r_{FR}$) to the mean friction radius ($r_m$) at a contact force ($F_A$) which corresponds to approximately the rated contact force $F_{AN}$) required for the transmission of the rated torque ($T_N$) is less than or equal to one and greater than 0.97,

**characterized in that**

the mean force application radius ($r_{FA}$) of the actuator (3, 23, 24, 27, 123) and/or the mean force application radius ($r_{FR}$) of the back plate (14, 17, 18, 32, 114, 132) can be varied in accordance with the contact force ($F_A$) in such a way that, when the contact force ($F_A$) is less than the rated contact force ($F_{AN}$), either one or both mean force application radii ($r_{FA}$, $r_{FR}$) lies or lie between the mean friction radius ($r_m$) and an inner radius ($r_i$) of the friction surfaces of the discs, or one or both mean force application radii ($r_{FA}$, $r_{FR}$) lies or lie between the mean friction radius ($r_m$) and an outer radius ($r_a$) of the friction surfaces of the discs.

2. Multi-disc clutch according to Claim 1, **characterized in that** the ratio of the mean force application radii ($r_{FA}$, $r_{FR}$) to the mean friction radius ($r_m$) is greater than 0.99, preferably 0.997, at a contact force ($F_A$) which corresponds to approximately the rated contact force ($F_{AN}$).

3. Multi-disc clutch according to Claim 1 or 2, **characterized in that** the mean force application radii ($r_{FA}$, $r_{FR}$) are identical or virtually identical at a contact force ($F_A$) which corresponds to approximately the rated contact force ($F_{AN}$).

4. Multi-disc clutch according to one of Claims 1 to 3, **characterized in that** the back plate (14, 17, 18, 32, 114, 117, 118, 132) has a clearance angle surface radially to the outside of the mean friction radius ($r_m$) when it is supported axially against the outer disc carrier, and/or **in that** the back plate has a clearance angle surface radially to the inside of the mean friction radius when it is supported axially against the inner disc carrier.

5. Multi-disc clutch according to Claim 4, **characterized in that** the clearance angle surface is of conical or stepped design.

6. Multi-disc clutch according to one of the preceding claims,
**characterized in that** the back plate (14, 17, 18, 32, 114, 117, 118, 132) and/or the actuator (3, 23, 24, 27, 123) has an annular crest (15, 20, 22, 26, 28, 29, 30, 115, 120, 122, 128, 129, 130) or have annular crests (15, 20, 22, 26, 28, 29, 30, 115, 120, 122, 128, 129, 130), which enters or enter into operative connection with the contact pressure plate (4, 104) and/or the counterplate (16, 133) upon actuation.

7. Multi-disc clutch according to Claim 6,
**characterized in that** the annular crest (15, 20, 29, 115, 120, 129) or annular crests (15, 20, 29, 115, 120, 129) is/are arranged radially at the location of the corresponding mean force application radius ($r_{FA}$, $r_{FR}$) at a contact force ($F_A$) which corresponds to approximately the rated contact force ($F_{AN}$).

8. Multi-disc clutch according to one of the preceding claims,
**characterized in that** the mean force application radius ($r_{FA}$) of the actuator (3, 23, 24, 27, 123) and/or the mean force application radius ($r_{FR}$) of the back plate (14, 17, 18, 32, 114, 132) lies or lie between the mean friction radius ($r_m$) and an inner radius ($r_i$) of the friction surfaces of the discs at a contact force ($F_A$) which corresponds to approximately up to 30%, preferably up to 5% to 15%, of the rated contact force ($F_{AN}$).

9. Multi-disc clutch according to Claim 8,
**characterized in that** the mean force application radius ($r_{FA}$) of the actuator (3, 23, 24, 27, 123) and/or the mean force application radius ($r_{FR}$) of the back plate (14, 17, 18, 32, 114, 132) lies or lie in the inner fifth between the mean friction radius and the inner radius ($r_i$) of the friction surfaces of the discs at a contact force ($F_A$) which corresponds to approximately up to 30%, preferably up to 5% to 15%, of the rated contact force ($F_{AN}$).

10. Multi-disc clutch according to Claim 9,
**characterized in that** the mean force application radius ($r_{FA}$) of the actuator (3, 23, 24, 27) and/or the mean force application radius ($r_{FR}$) of the back plate (14, 17, 18, 32, 114, 132) lies or lie at the inner radius ($r_i$) of the friction surfaces of the discs at a contact force ($F_A$) which corresponds to up to approximately 30%, preferably approximately 5% to 15%, of the rated contact force ($F_{AN}$).

11. Multi-disc clutch according to one of Claims 8 to 10, **characterized in that** the mean force application radii ($r_{FA}$, $r_{FR}$) of the actuator (3, 23, 24, 27) and of the back plate (14, 17, 18, 32, 114, 132) are identical at a contact force ($F_A$) which corresponds to approximately up to 30%, preferably approximately to up to 5% to 15%, of the rated contact force ($F_{AN}$).

12. Multi-disc clutch according to one of Claims 8 to 11, **characterized in that** the back plate (14, 17, 18, 32) has at least one clearance angle surface radially to the outside of the inner radius ($r_i$) when the back plate is supported axially against the outer disc carrier.

13. Multi-disc clutch according to Claim 12, **characterized in that** the at least one clearance angle surface is of conical or stepped design.

14. Multi-disc clutch according to one of Claims 8 to 13, **characterized in that** the back plate (14, 17, 18, 32, 114, 132) and/or the actuator (3, 23, 24, 27) has an annular crest (15, 20, 22, 26, 28, 29, 30, 115, 130) or have annular crests (15, 20, 22, 26, 28, 29, 30, 115, 130), which enters or enter into operative connection with the contact pressure plate (4, 104) and/or the counterplate (16, 133) upon actuation.

15. Multi-disc clutch according to Claim 14, **characterized in that** the annular crest (15, 20, 22, 26, 28, 29, 30, 115, 130) or annular crests (15, 20, 22, 26, 28, 29, 30, 115, 130) is/are arranged at the location of the corresponding mean force application radius ($r_{FA}$, $r_{FR}$) at a contact force ($F_A$) which corresponds to approximately up to 30%, preferably to approximately up to 5% to 15%, of the rated contact force ($F_{AN}$).

16. Multi-disc clutch according to one of Claims 8 to 15, **characterized in that** the actuator (3, 23, 24, 27, 123) and/or the back plate (14, 18, 32, 114, 132) has or have a resilient element (18, 21, 134), which transmits or transmit the contact force ($F_A$) at the inner radius ($r_i$) or close to the inner radius ($r_i$) at a contact force ($F_A$) which corresponds to approximately up to 30%, preferably approximately to up to 5% to 15%, of the rated contact force ($F_{AN}$).

17. Multi-disc clutch according to Claim 16, **characterized in that** the resilient element is a diaphragm spring (21, 134) or **in that** the resilient elements are diaphragm springs (21, 134).

18. Multi-disc clutch according to Claim 16, **characterized in that** the resilient element or resilient elements is or are formed by corresponding shaping of the actuator (24) and/or of the back plate (18).

19. Multi-disc clutch according to Claim 18, **characterized in that** the back plate (18) is of hook-shaped design in axial half section, having a finger (28) arranged radially in the region of the inner radius ($r_i$) and a knee (19) arranged radially in the region of the mean friction radius ($r_m$).

20. Multi-disc clutch according to Claim 19, **characterized in that** the knee (19) is spaced apart from the counterplate (16) up to a contact force ($F_A$) of approximately 30%, preferably approximately 5% to 15%, of the rated contact force ($F_{AN}$).

21. Multi-disc clutch according to one of Claims 19 to 20, **characterized in that** the actuator (24) is of L-shaped design in axial half section, having an inner limb (31), which is situated in the region of the inner radius ($r_i$), and having a knee (25) arranged radially in the region of the mean friction radius ($r_m$).

22. Multi-disc clutch according to Claim 21, **characterized in that** the knee (25) is spaced apart from the contact pressure plate (4) up to a contact force ($F_A$) of up to approximately 30%, preferably approximately 5% to 15%, of the rated contact force ($F_{AN}$).

23. Multi-disc clutch according to one of Claims 1 to 7, **characterized in that** the mean force application radius ($r_{FA}$) of the actuator (3, 23, 123) and/or the mean force application radius ($r_{FR}$) of the back plate (14, 32, 114, 117, 118, 132) lies or lie between the mean friction radius ($r_m$) and an outer radius ($r_a$) of the friction surfaces of the discs at a contact force ($F_A$) which corresponds to approximately up to 30%, preferably up to 5% to 15%, of the rated contact force ($F_{AN}$).

24. Multi-disc clutch according to Claim 23, **characterized in that** the mean force application radius ($r_{FA}$) of the actuator (3, 23, 123) and/or the mean force application radius ($r_{FR}$) of the back plate (14, 32, 114, 117, 118, 132) lies or lie in the inner fifth between the mean friction radius and the outer radius ($r_a$) of the friction surfaces of the discs at a contact force ($F_A$) which corresponds to approximately up to 30%, preferably up to 5% to 15%, of the rated contact force ($F_{AN}$).

25. Multi-disc clutch according to Claim 24, **characterized in that** the mean force application radius ($r_{FA}$) of the actuator (3, 23, 123) and/or the mean force application radius ($r_{FR}$) of the back plate (14, 32, 114, 117, 118, 132) lie or lies at the outer radius ($r_a$) of the friction surfaces of the discs at a contact force ($F_A$) which corresponds to up to approximately 30%, preferably approximately 5% to 15%, of the rated contact force ($F_{AN}$).

26. Multi-disc clutch according to one of Claims 23 to 25, **characterized in that** the mean force application radii ($r_{FA}$, $r_{FR}$) of the actuator (3, 23, 123) and of the back plate (14, 32, 114, 117, 118, 132) are identical at a contact force ($F_A$) which corresponds to approximately up to 30%, preferably to approximately up to 5% to 15%, of the rated contact force ($F_{AN}$).

27. Multi-disc clutch according to one of Claims 23 to 26, **characterized in that** the back plate (114, 117, 118, 132) has at least one clearance angle surface radially to the inside of the outer radius ($r_a$) when the back plate is supported axially against the inner disc carrier.

28. Multi-disc clutch according to Claim 27, **characterized in that** the at least one clearance angle surface is of conical or stepped design.

29. Multi-disc clutch according to one of Claims 23 to 28, **characterized in that** the back plate (14, 32, 114, 117, 118, 132) and/or the actuator (3, 23, 24, 27, 123) has an annular crest (15, 20, 30, 115, 120, 122, 129, 130) or have annular crests (15, 20, 30, 115, 120, 122, 129, 130), which enters or enter into operative connection with the contact pressure plate (4, 104) and/or the counterplate (16, 133) upon actuation.

30. Multi-disc clutch according to Claim 29, **characterized in that** the annular crest (15, 20, 30, 115, 120, 122, 129, 130) or annular crests (15, 20, 30, 115, 120, 122, 129, 130) is/are arranged at the location of the corresponding mean force application radius ($r_{FA}$, $r_{FR}$) at a contact force ($F_A$) which corresponds to approximately up to 30%, preferably approximately up to 5% to 15%, of the rated contact force ($F_{AN}$).

31. Multi-disc clutch according to one of Claims 23 to 30, **characterized in that** the actuator (3, 23, 123) and/or the back plate (14, 32, 118) has or have a resilient element (34, 118, 121), which transmits or transmit the contact force ($F_A$) at the outer radius ($r_a$) or close to the outer radius ($r_a$) at a contact force ($F_A$) which corresponds to approximately up to 30%, preferably approximately to up to 5% to 15%, of the rated contact force ($F_{AN}$).

32. Multi-disc clutch according to Claim 31, **characterized in that** the resilient element is a diaphragm spring (34, 121) or **in that** the resilient elements are diaphragm springs (34, 121).

33. Multi-disc clutch according to Claim 31, **characterized in that** the resilient element or resilient elements is or are formed by corresponding shaping of the actuator and/or of the back plate (118).

34. Multi-disc clutch according to Claim 33, **characterized in that** the back plate (118) is of hook-shaped design in axial half section, having a finger (128) arranged radially in the region of the outer radius ($r_a$) and a knee (119) arranged radially in the region of the mean friction radius ($r_m$) when the back plate (118) is supported axially against the inner disc carrier (2).

35. Multi-disc clutch according to Claim 34, **characterized in that** the knee (119) is spaced apart from the counterplate (133) up to a contact force ($F_A$) of approximately 30%, preferably approximately 5% to 15%, of the rated contact force ($F_{AN}$).

36. Multi-disc clutch according to one of Claims 33 to 35, **characterized in that** the actuator (3, 123) is of L-shaped design in axial half section, having an outer limb, which is situated in the region of the outer radius ($r_a$), and having a knee arranged radially in the region of the mean friction radius ($r_m$).

37. Multi-disc clutch according to Claim 36, **characterized in that** the knee is spaced apart from the contact pressure plate (4) up to a contact force ($F_A$) of up to approximately 30%, preferably approximately 5% to 15%, of the rated contact force ($F_{AN}$).

38. Multi-disc clutch according to one of the preceding claims, **characterized in that** the back plate (14, 17, 18, 32, 114, 117, 118, 132) is connected for conjoint rotation to the outer disc carrier (1) or the inner disc carrier (2), and **in that** the counterplate (16, 133) is connected to the same disc carrier (1, 2) as the back plate (14, 17, 18, 32, 114, 117, 118, 132).

39. Multi-disc clutch according to Claim 38, **characterized in that** the back plate (14, 17, 18, 32, 114, 117, 118, 132) is supported by means of a retaining ring (9, 135) against the disc carrier (1, 2) with which the back plate (14, 17, 18, 32, 114, 117, 118, 132) is connected for conjoint rotation.

**Revendications**

1. Embrayage à disques comprenant :

    - des disques externes (4, 5, 6, 7, 16, 104, 105, 106, 107) portés par un support de disques externes (1) pouvant tourner autour d'un axe de rotation (ax), et des disques internes (10, 11, 12, 13, 110, 111, 112, 113, 133) portés par un support de disques internes (2) pouvant tourner autour de l'axe de rotation (ax), les disques externes (4, 5, 6, 7, 16, 104, 105, 106, 107) et les disques internes (10, 11, 12, 13, 110, 111, 112, 113, 133) formant un paquet de disques,

- un actionneur déplaçable axialement (3, 23, 24, 27, 123), qui, lors de l'actionnement sur un rayon d'action de force moyen ($r_{FA}$) par rapport à l'axe de rotation (ax), transmet une force de pression ($F_A$) à un disque du paquet de disques formant un plateau de pression (4, 104),

- un plateau arrière (8, 14, 17, 18, 32, 114, 117, 118, 132), qui, lors de l'actionnement de l'actionneur (3, 23, 24, 27, 123) sur un rayon d'action de force moyen ($r_{FR}$) par rapport à l'axe de rotation (ax), transmet une force opposée ($F_R$) à un disque du paquet de disques formant un contre-plateau (16, 133),

- les disques (4, 5, 6, 7, 16, 10, 11, 12, 13, 104, 105, 106, 107, 108, 110, 111, 112, 113, 133) étant amenés en contact d'engagement par friction avec un rayon de friction moyen ($r_m$) et transmettant un couple (T),

- le rapport des rayons d'action de force moyens ($r_{FA}$. $r_{FR}$) au rayon de friction moyen ($r_m$) dans le cas d'une force de pression ($F_A$), qui correspond approximativement à la force de pression nominale ($F_{AN}$) nécessaire pour un transfert du couple nominal ($T_N$), étant inférieur ou égal à un et étant supérieur à 0, 97,

**caractérisé en ce que** le rayon d'action de force moyen ($r_{FA}$) de l'actionneur (3, 23, 24, 27, 123) et/ou le rayon d'action de force moyen ($r_{FR}$) du plateau arrière (14, 17, 18, 32, 114, 132) est ou sont variables en fonction de la force de pression ($F_A$) de telle sorte que dans le cas d'une force de pression ($F_A$) inférieure à la force de pression nominale ($F_{AN}$), soit un ou les deux rayons d'action de force moyens ($r_{FA}$, $r_{FR}$) se situe ou se situent entre le rayon de friction moyen ($r_m$) et un rayon interne ($r_i$) des surfaces de friction des disques, soit un ou les deux rayons d'action de force moyens ($r_{FA}$, $r_{FR}$) se situe ou se situent entre le rayon de friction moyen ($r_m$) et un rayon externe ($r_a$) des surfaces de friction des disques.

2. Embrayage à disques selon la revendication 1, **caractérisé en ce que** le rapport des rayons d'action de force moyens ($r_{FA}$, $r_{FR}$) au rayon de friction moyen ($r_m$) dans le cas d'une force de pression ($F_A$), qui correspond approximativement à la force de pression nominale ($F_{AN}$), est supérieur à 0,99, de préférence est de 0,997.

3. Embrayage à disques selon la revendication 1 ou 2, **caractérisé en ce que** les rayons d'action de force moyens ($r_{FA}$, $r_{FR}$), dans le cas d'une force de pression ($F_A$) qui correspond approximativement à la force de pression nominale ($F_{AN}$), sont identiques ou pratiquement identiques.

4. Embrayage à disques selon l'une quelconque des revendications 1 à 3, **caractérisé en ce que** le plateau arrière (14, 17, 18, 32, 114, 117, 118, 132) présente, radialement à l'extérieur du rayon de friction moyen ($r_m$) une surface inclinée libre lorsqu'il est supporté axialement sur le support de disques externes ou en ce que le plateau arrière présente, radialement à l'intérieur du rayon de friction moyen, une surface inclinée libre lorsqu'il est supporté axialement sur le support de disques internes.

5. Embrayage à disques selon la revendication 4, **caractérisé en ce que** la surface inclinée libre est réalisée sous forme conique ou étagée.

6. Embrayage à disques selon l'une quelconque des revendications précédentes, **caractérisé en ce que** le plateau arrière (14, 17, 18, 32, 114, 117, 118, 132) et/ou l'actionneur (3, 23, 24, 27, 123) présente ou présentent une saillie annulaire (15, 20, 22, 26, 28, 29, 30, 115, 120, 122, 128, 129, 130) ou des saillies annulaires (15, 20, 22, 26, 28, 29, 30, 115, 120, 122, 128, 129, 130), entrant en liaison fonctionnelle avec le plateau de pression (4, 104) ou le contre-plateau (16, 133) lors de l'actionnement.

7. Embrayage à disques selon la revendication 6, **caractérisé en ce que** la saillie annulaire (15, 20, 29, 115, 120, 129) ou les saillies annulaires (15, 20, 29, 115, 120, 129) est ou sont disposées radialement à l'endroit du rayon d'action de force moyen ($r_{FA}$, $r_{FR}$) correspondant dans le cas d'une force de pression ($F_A$) qui correspond approximativement à la force de pression nominale ($F_{AN}$).

8. Embrayage à disques selon l'une quelconque des revendications précédentes, **caractérisé en ce que** le rayon d'action de force moyen ($r_{FA}$) de l'actionneur (3, 23, 24, 27, 123) et/ou le rayon d'action de force moyen ($r_{FR}$) du plateau arrière (14, 17, 18, 32, 114, 132), dans le cas d'une force de pression ($F_A$) qui correspond approximativement au plus à 30 %, de préférence au plus à 5 % à 15 % de la force de pression nominale ($F_{AN}$), est ou sont situés entre le rayon de friction moyen ($r_m$) et un rayon interne ($r_i$) des surfaces de friction des disques.

9. Embrayage à disques selon la revendication 8,

**caractérisé en ce que** le rayon d'action de force moyen ($r_{FA}$) de l'actionneur (3, 23, 24, 27, 123) et/ou le rayon d'action de force moyen ($r_{FR}$) du plateau arrière (14, 17, 18, 32, 114, 132), dans le cas d'une force de pression ($F_A$) qui correspond approximativement au plus à 30 %, de préférence au plus à 5 % à 15 % de la force de pression nominale ($F_{AN}$), est ou sont situés dans le cinquième intérieur entre le rayon de friction moyen et le rayon interne ($r_i$) des surfaces de friction des disques.

10. Embrayage à disques selon la revendication 9, **caractérisé en ce que** le rayon d'action de force moyen ($r_{FA}$) de l'actionneur (3, 23, 24, 27) et/ou le rayon d'action de force moyen ($r_{FR}$) du plateau arrière (14, 17, 18, 32, 114, 132), dans le cas d'une force de pression ($F_A$) qui correspond approximativement au plus à 30 %, de préférence approximativement à 5 % à 15 % de la force de pression nominale ($F_{AN}$), est ou sont situés sur le rayon interne ($r_i$) des surfaces de friction des disques.

11. Embrayage à disques selon l'une quelconque des révendications 8 à 10, **caractérisé en ce que** les rayons d'action de force moyens ($r_{FA}$, $r_{FR}$) de l'actionneur (3, 23, 24, 27) et du plateau arrière (14, 17, 18, 32, 114, 132), dans le cas d'une force de pression ($F_A$) qui correspond approximativement au plus à 30 %, de préférence approximativement au plus à 5 % à 15 % de la force de pression nominale ($F_{AN}$), est ou sont identiques.

12. Embrayage à disques selon l'une quelconque des revendications 8 à 11, **caractérisé en ce que** le plateau arrière (14, 17, 18, 32) présente, radialement à l'extérieur du rayon interne ($r_i$), au moins une surface inclinée libre, lorsque le plateau arrière est supporté axialement sur le support de disques externes.

13. Embrayage à disques selon la revendication 12, **caractérisé en ce que** l'au moins une surface inclinée libre est réalisée sous forme conique ou étagée.

14. Embrayage à disques selon l'une quelconque des revendications 8 à 13, **caractérisé en ce que** le plateau arrière (14, 17, 18, 32, 114, 132) et/ou l'actionneur (3, 23, 24, 27) présente ou présentent une saillie annulaire (15, 20, 22, 26, 28, 29, 30, 115, 130) ou des saillies annulaires (15, 20, 22, 26, 28, 29, 30, 115, 130), entrant en liaison fonctionnelle avec le plateau de pression (4, 104) ou le contre-plateau (16, 133) lors de l'actionnement.

15. Embrayage à disques selon la revendication 14, **caractérisé en ce que** la saillie annulaire (15, 20, 22, 26, 28, 29, 30, 115, 130) ou les saillies annulaires (15, 20, 22, 26, 28, 29, 30, 115, 130) est ou sont disposées à l'endroit du rayon d'action de force moyen ($r_{FA}$, $r_{FR}$) correspondant dans le cas d'une force de pression ($F_A$) qui correspond approximativement au plus à 30 %, de préférence approximativement au plus à 5 % à 15 % de la force de pression nominale ($F_{AN}$).

16. Embrayage à disques selon l'une quelconque des revendications 8 à 15, **caractérisé en ce que** l'actionneur (3, 23, 24, 27, 123) et/ou le plateau arrière (14, 18, 32, 114, 132) présente ou présentent un ou des éléments de ressort (18, 21, 134), qui, dans le cas d'une force de pression ($F_A$) qui correspond approximativement au plus à 30 %, de préférence au plus à 5 % à 15 % de la force de pression nominale ($F_{AN}$), transmet ou transmettent la force de pression ($F_A$) au niveau du rayon interne ($r_i$) ou à proximité du rayon interne ($r_i$).

17. Embrayage à disques selon la revendication 16, **caractérisé en ce que** l'élément de ressort est un ressort Belleville (21, 134) ou **en ce que** les éléments de ressort sont des ressorts Belleville (21, 134).

18. Embrayage à disques selon la revendication 16, **caractérisé en ce que** l'élément de ressort ou les éléments de ressort est ou sont formés par une formation correspondante de l'actionneur (24) et/ou du plateau arrière (18).

19. Embrayage à disques selon la revendication 18, **caractérisé en ce que** le plateau arrière (18) est réalisé en demi-coupe axiale sous forme de crochet avec un doigt (28) disposé radialement dans la région du rayon interne ($r_i$) et un genou (19) disposé radialement dans la région du rayon de friction moyen ($r_m$).

20. Embrayage à disques selon la revendication 19, **caractérisé en ce que** le genou (19), jusqu'à une force de pression ($F_A$) d'environ 30 %, de préférence d'environ 5 % à 15 % de la force de pression nominale ($F_{AN}$), est disposé à l'écart du contre-plateau (16).

21. Embrayage à disques selon l'une quelconque des revendications 19 à 20, **caractérisé en ce que** l'actionneur (24) est réalisé en forme de L en demi-coupe axiale, avec une branche interne (31) qui se trouve dans la région du rayon interne ($r_i$) et avec un genou (25) disposé radialement dans la région du rayon de friction moyen ($r_m$).

22. Embrayage à disques selon la revendication 21, **caractérisé en ce que** le genou (25), jusqu'à une force de pression ($F_A$) approximativement au plus d'environ 30 %, de préférence d'environ 5 % à 15 % de la force de pression nominale ($F_{AN}$), est disposé à l'écart du plateau de pression (4).

23. Embrayage à disques selon l'une quelconque des revendications 1 à 7,
**caractérisé en ce que** le rayon d'action de force moyen ($r_{FA}$) de l'actionneur (3, 23, 123) et/ou le rayon d'action de force moyen ($r_{FR}$) du plateau arrière (14, 32, 114, 117, 118, 132), dans le cas d'une force de pression ($F_A$) qui correspond approximativement au plus à environ 30 %, de préférence au plus à 5 % à 15 % de la force de pression nominale ($F_{AN}$), est ou sont situés entre le rayon de friction moyen ($r_m$) et un rayon externe ($r_a$) des surfaces de friction des disques.

24. Embrayage à disques selon la revendication 23,
**caractérisé en ce que** le rayon d'action de force moyen ($r_{FA}$) de l'actionneur (3, 23, 123) et/ou le rayon d'action de force moyen ($r_{FR}$) du plateau arrière (14, 32, 114, 117, 118, 132), dans le cas d'une force de pression ($F_A$) qui correspond approximativement au plus à environ 30 %, de préférence au plus à 5 % à 15 % de la force de pression nominale ($F_{AN}$), est ou sont situés dans le cinquième extérieur entre le rayon de friction moyen et le rayon externe ($r_a$) des surfaces de friction des disques.

25. Embrayage à disques selon la revendication 24,
**caractérisé en ce que** le rayon d'action de force moyen ($r_{FA}$) de l'actionneur (3, 23, 123) et/ou le rayon d'action de force moyen ($r_{FR}$) du plateau arrière (14, 32, 114, 117, 118, 132), dans le cas d'une force de pression ($F_A$) qui correspond approximativement au plus à environ 30 %, de préférence environ à 5 % à 15 % de la force de pression nominale ($F_{AN}$), est ou sont situés sur le rayon externe ($r_a$) des surfaces de friction des disques.

26. Embrayage à disques selon l'une quelconque des revendications 23 à 25,
**caractérisé en ce que** les rayons d'action de force moyens ($r_{FA}$, $r_{FR}$) de l'actionneur (3, 23, 123) et du plateau arrière (14, 32, 114, 117, 118, 132), dans le cas d'une force de pression ($F_A$) qui correspond approximativement au plus à environ 30 %, de préférence approximativement au plus à 5 % à 15 % de la force de pression nominale ($F_{AN}$), sont identiques.

27. Embrayage à disques selon l'une quelconque des revendications 23 à 26,
**caractérisé en ce que** le plateau arrière (114, 117, 118, 132) est supporté radialement à l'intérieur du rayon externe ($r_a$) d'au moins une surface inclinée libre, lorsque le plateau arrière est supporté axialement sur le support de disques internes.

28. Embrayage à disques selon la revendication 27, **caractérisé en ce que** l'au moins une surface inclinée libre est réalisée sous forme conique ou étagée.

29. Embrayage à disques selon l'une quelconque des revendications 23 à 28,
**caractérisé en ce que** le plateau arrière (14, 32, 114, 117, 118, 132) et/ou l'actionneur (3, 23, 24, 27, 123) présente une saillie annulaire (15, 20, 30, 115, 120, 122, 129, 130), ou présentent des saillies annulaires (15, 20, 30, 115, 120, 122, 129, 130), entrant en liaison fonctionnelle avec le plateau de pression (4, 104) ou le contre-plateau (16, 133) lors de l'actionnement.

30. Embrayage à disques selon la revendication 29,
**caractérisé en ce que** la saillie annulaire (15, 20, 30, 115, 120, 122, 129, 130) ou les saillies annulaires (15, 20, 30, 115, 120, 122, 129, 130), est ou sont disposées à l'endroit du rayon d'action de force moyen ($r_{FA}$, $r_{FR}$) correspondant dans le cas d'une force de pression ($F_A$) qui correspond approximativement au plus à 30 %, de préférence au plus à 5 % à 15 % de la force de pression nominale ($F_{AN}$).

31. Embrayage à disques selon l'une quelconque des revendications 23 à 30,
**caractérisé en ce que** l'actionneur (3, 23, 123) et/ou le plateau arrière (14, 32, 118) présente ou présentent un ou des éléments de ressort (34, 118, 121), qui, dans le cas d'une force de pression ($F_A$) qui correspond approximativement au plus à 30 %, de préférence au plus à 5 % à 15 % de la force de pression nominale ($F_{AN}$), transmet ou transmettent la force de pression ($F_A$) au niveau du rayon externe ($r_a$) ou à proximité du rayon externe ($r_a$).

32. Embrayage à disques selon la revendication 31, **caractérisé en ce que** l'élément de ressort est un ressort Belleville (34, 121) ou **en ce que** les éléments de ressort sont des ressorts Belleville (34, 121).

33. Embrayage à disques selon la revendication 31, **caractérisé en ce que** l'élément de ressort ou les éléments de ressort est ou sont formés par une formation correspondante de l'actionneur et/ou du plateau arrière (118).

34. Embrayage à disques selon la revendication 33, **caractérisé en ce que** le plateau arrière (118) est réalisé en demi-coupe axiale sous forme de crochet avec un doigt (128) disposé radialement dans la région du rayon externe ($r_a$) et un genou (119) disposé radialement dans la région du rayon de friction moyen ($r_m$), lorsque le plateau arrière (118) est supporté axialement dans le support de disques internes (2).

35. Embrayage à disques selon la revendication 34, **ca-**

**ractérisé en ce que** le genou (119), jusqu'à une force de pression ($F_A$) d'environ 30 %, de préférence d'environ 5 % à 15 % de la force de pression nominale ($F_{AN}$), est disposé à l'écart du contre-plateau (133).

36. Embrayage à disques selon l'une quelconque des revendications 33 à 35,
**caractérisé en ce que** l'actionneur (3, 123) est réalisé en forme de L en demi-coupe axiale, avec une branche externe qui se trouve dans la région du rayon externe ($r_a$) et avec un genou disposé radialement dans la région du rayon de friction moyen ($r_m$).

37. Embrayage à disques selon la revendication 36,
**caractérisé en ce que** le genou, jusqu'à une force de pression ($F_A$) approximativement au plus d'environ 30 %, de préférence d'environ 5 % à 15 % de la force de pression nominale ($F_{AN}$), est disposé à l'écart du plateau de pression (4).

38. Embrayage à disques selon l'une quelconque des revendications précédentes,
**caractérisé en ce que** le plateau arrière (14, 17, 18, 32, 114, 117, 118, 132), est connecté de manière solidaire en rotation au support de disques externes (1) ou au support de disques internes (2) et **en ce que** le contre-plateau (16, 133) est connecté au même support de disques (1, 2) que le plateau arrière (14, 17, 18, 32, 114, 117, 118, 132).

39. Embrayage à disques selon la revendication 38,
**caractérisé en ce que** le plateau arrière (14, 17, 18, 32, 114, 117, 118, 132) s'appuie par le biais d'une bague de fixation (9, 135) contre le support de disques (1, 2), auquel le plateau arrière (14, 17, 18, 32, 114, 117, 118, 132) est connecté de manière solidaire en rotation.

Fig. 1

Fig. 2

EP 1 577 575 B1

Fig. 3

Fig. 4

22

Fig. 5

1   104   105   106   107

20

115

114

135

3   110   111   112   113   133

a

2

$r_0$   $r_{FA}$   $r$   $r_i$   $r_{FR}$   $r_a$

ax

Fig. 6

1   104   105   106   107

20

115

132

135

3   110   111   112   113   133

2

$r_0$   $r_{FA}$   $r$   $r_i$   $r_{FR}$   $r_a$

ax

# Fig. 7

# Fig. 8

## Fig. 9

## Fig. 10

Fig. 11

Fig. 12

## Fig. 13

## Fig. 14

Fig. 15

Fig. 16

## Fig. 17

## Fig. 18

**Fig. 19**

**Fig. 20**

## Fig. 21

## Fig. 22

Fig. 23

Fig. 24

## Fig. 25
(Stand der Technik)

## Fig. 26
(Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6116398 A
- DE 19530443
- US 2004035666 A
- US 5305943 A
- EP 1411256 A